(19) Europäisches Patentamt / European Patent Office / Office européen des brevets

(11) **EP 4 787 859 A1**

(12) **EUROPEAN PATENT APPLICATION**
published in accordance with Art. 153(4) EPC

(43) Date of publication:
05.08.2026  Bulletin 2026/32

(21) Application number: 24870738.2

(22) Date of filing: 25.09.2024

(51) International Patent Classification (IPC):
*H04N 19/597* (2014.01)    *H04N 19/186* (2014.01)

(52) Cooperative Patent Classification (CPC):
H04N 19/186; H04N 19/597; H04N 19/61;
H04N 19/96

(86) International application number:
PCT/CN2024/120907

(87) International publication number:
WO 2025/067194 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023  CN 202311273886

(71) Applicant: Vivo Mobile Communication Co., Ltd.
Dongguan, Guangdong 523863 (CN)

(72) Inventors:
• ZHANG, Wei
  Dongguan, Guangdong 523863 (CN)
• LIU, Xiaoyu
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: Lavoix
Bayerstraße 83
80335 München (DE)

(54) **POINT CLOUD CODING PROCESSING METHOD, POINT CLOUD DECODING PROCESSING METHOD, AND RELATED DEVICE**

(57)    This application discloses a point cloud encoding processing method, a point cloud decoding processing method, and a related device, pertaining to the field of computer technology. A point cloud encoding processing method according to an embodiment of this application includes: performing, by an encoder, transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space; performing, by the encoder, prediction encoding processing on the second attribute transform coefficient based on the first attribute transform coefficient, to obtain a residual attribute transform coefficient corresponding to the second attribute transform coefficient; and performing, by the encoder, encoding processing on the residual attribute transform coefficient, to obtain a first encoding result; where a bitstream of the to-be-encoded point cloud includes the first encoding result.

FIG. 4

**Description**

**CROSS-REFERENCE TO RELATED APPLICATIONS**

This application claims priority to Chinese Patent Application No. 202311273886.2 filed in China on September 28, 2023, which is incorporated herein by reference in its entirety.

**TECHNICAL FIELD**

This application pertains to the field of computer technology, and specifically relates to a point cloud encoding processing method, a point cloud decoding processing method, and a related device.

**BACKGROUND**

A point cloud, a representation of a three-dimensional object or scene, consists of a set of discrete points irregularly distributed in space that express the spatial structure and surface attributes of the three-dimensional object or scene. To accurately reflect the information in space, a considerable number of discrete points are required. To reduce the bandwidth occupied by point cloud data storage and transmission, point cloud data needs to be encoded and compressed. Point cloud data typically consists of geometry information describing positions, such as three-dimensional coordinates (x, y, z), attribute information at those positions, such as color (R, G, B) or reflectance, and the like. In the point cloud coding and compression process, coding of geometry information and coding of attribute information are performed separately.

In the related art, during a region adaptive hierarchical transform (Region Adaptive Hierarchical Transform, RAHT) attribute coding process for attribute information, an attribute transform coefficient of a to-be-encoded node is obtained, where the attribute transform coefficient of the to-be-encoded node includes attribute transform coefficients of multiple color space channels. Directly encoding the attribute transform coefficient of each color space channel results in relatively low coding efficiency.

**SUMMARY**

Embodiments of this application provide a point cloud encoding processing method, a point cloud decoding processing method, and a related device, to solve the problem of relatively low encoding efficiency.

According to a first aspect, a point cloud encoding processing method is provided, including:

performing, by an encoder, transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space;

performing, by the encoder, prediction encoding processing on the second attribute transform coefficient based on the first attribute transform coefficient, to obtain a residual attribute transform coefficient corresponding to the second attribute transform coefficient; and

performing, by the encoder, encoding processing on the residual attribute transform coefficient, to obtain a first encoding result; where

a bitstream of the to-be-encoded point cloud includes the first encoding result.

According to a second aspect, a point cloud decoding processing method is provided, including:

performing, by a decoder, decoding processing on a first encoding result in a bitstream, to obtain a reconstructed value of a residual attribute transform coefficient, where the residual attribute transform coefficient is a residual attribute transform coefficient corresponding to a second attribute transform coefficient corresponding to a second channel;

performing, by the decoder, prediction decoding processing on the reconstructed value of the residual attribute transform coefficient based on a reconstructed value of a first attribute transform coefficient corresponding to a first channel, to obtain a reconstructed value of the second attribute transform coefficient, where the first channel and the second channel are different channels in a same color space; and

obtaining, by the decoder, an attribute transform coefficient of a to-be-decoded node based on the reconstructed value of the second attribute transform coefficient.

According to a third aspect, a point cloud encoding processing apparatus is provided, including:

a transform module configured to perform transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space;

a first encoding module configured to perform prediction encoding processing on the second attribute transform coefficient based on the first attribute transform coefficient, to obtain a residual attribute transform coefficient corresponding to the second attribute transform coefficient; and

a second encoding module configured to perform encoding processing on the residual attribute transform coefficient, to obtain a first encoding result; where

a bitstream of the to-be-encoded point cloud includes the first encoding result.

According to a fourth aspect, a point cloud decoding processing apparatus is provided, including:

a first decoding module configured to perform decoding processing on a first encoding result in a bitstream, to obtain a reconstructed value of a residual attribute transform coefficient, where the residual attribute transform coefficient is a residual attribute transform coefficient corresponding to a second attribute transform coefficient corresponding to a second channel;

a second decoding module configured to perform prediction decoding processing on the reconstructed value of the residual attribute transform coefficient based on a reconstructed value of a first attribute transform coefficient corresponding to a first channel, to obtain a reconstructed value of the second attribute transform coefficient, where the first channel and the second channel are different channels in a same color space; and

an obtaining module configured to obtain an attribute transform coefficient of a to-be-decoded node based on the reconstructed value of the second attribute transform coefficient.

According to a fifth aspect, an electronic device is provided, where the electronic device includes a processor and a memory, the memory stores a program or instructions capable of running on the processor, and the program or instructions, when executed by the processor, implement the steps of the method according to the first aspect, or implement the steps of the method according to the second aspect.

According to a sixth aspect, an electronic device is provided, including a processor and a communication interface. The processor is configured to: perform transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space; perform prediction encoding processing on the second attribute transform coefficient based on the first attribute transform coefficient, to obtain a residual attribute transform coefficient corresponding to the second attribute transform coefficient; and perform encoding processing on the residual attribute transform coefficient, to obtain a first encoding result; where a bitstream of the to-be-encoded point cloud includes the first encoding result. Alternatively, the processor is configured to: perform decoding processing on a first encoding result in a bitstream, to obtain a reconstructed value of a residual attribute transform coefficient, where the residual attribute transform coefficient is a residual attribute transform coefficient corresponding to a second attribute transform coefficient corresponding to a second channel; perform prediction decoding processing on the reconstructed value of the residual attribute transform coefficient based on a reconstructed value of a first attribute transform coefficient corresponding to a first channel, to obtain a reconstructed value of the second attribute transform coefficient, where the first channel and the second channel are different channels in a same color space; and obtain an attribute transform coefficient of a to-be-decoded node based on the reconstructed value of the second attribute transform coefficient.

According to a seventh aspect, an electronic device is provided, including: a memory configured to store video data, and a processing circuit configured to implement the steps of the method according to the first aspect, or implement the steps of the method according to the second aspect.

According to an eighth aspect, a readable storage medium is provided, where the readable storage medium stores a program or instructions, and the program or instructions, when executed by a processor, implement the steps of the method according to the first aspect, or implement the steps of the method according to the second aspect.

According to a ninth aspect, a codec system is provided, including: an encoder device and a decoder device, where the encoder device may be configured to perform the steps of the method according to the first aspect, and the decoder device may be configured to perform the steps of the method according to the second aspect.

According to a tenth aspect, a chip is provided, where the chip includes a processor and a communication interface, the communication interface is coupled to the processor, and the processor is configured to run a program or instructions to implement the method according to the first aspect, or implement the method according to the second aspect.

According to an eleventh aspect, a computer program/program product is provided, where the computer program/program product is stored in a storage medium, and the computer program/program product is executed by at least one processor to implement the steps of the method according to the first aspect, or implement the steps of the method according to the second aspect.

In the embodiments of this application, the encoder performs transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space; the encoder performs prediction encoding processing on the second attribute transform coefficient based on the first attribute transform coefficient, to obtain a residual attribute transform coefficient corresponding to the second attribute transform coefficient; and the encoder performs encoding processing on the residual attribute transform coefficient, to obtain a first encoding result; where a bitstream of the to-be-encoded point cloud includes the first encoding result. In this way, prediction encoding processing is performed on the second attribute transform coefficient based on the first attribute transform coefficient corresponding to the first channel, to obtain the residual attribute transform coefficient corresponding to the second attribute transform coefficient, and encoding processing is performed on the residual attribute transform coefficient to obtain the first encoding result. Compared to directly encoding the second attribute transform coefficient corresponding to the second channel, this can implement further compression and encoding through a correlation between color space channels, thereby improving encoding efficiency.

## BRIEF DESCRIPTION OF DRAWINGS

FIG. 1 is a framework diagram of a codec system in the related art;
FIG. 2a is a flowchart of an encoding process executed by an encoder in an AVS-PCC-based encoding framework in the related art;
FIG. 2b is a flowchart of an encoding process executed by an encoder in an MPEG G-PCC-based encoding framework in the related art;
FIG. 3a is a flowchart of a decoding process executed by a decoder in an AVS-PCC-based decoding framework in the related art;
FIG. 3b is a flowchart of a decoding process executed by a decoder in an MPEG G-PCC-based decoding framework in the related art;
FIG. 3c is a diagram of a point cloud G-PCC encoder framework in the related art;
FIG. 4 is a flowchart of a point cloud encoding processing method according to an embodiment of this application;
FIG. 5 is a flowchart of a point cloud decoding processing method according to an embodiment of this application;
FIG. 6 is a schematic diagram of a codec test result according to an embodiment of this application;
FIG. 7 is another schematic diagram of a codec test result according to an embodiment of this application;
FIG. 8 is a schematic structural diagram of a point cloud encoding processing apparatus according to an embodiment of this application;
FIG. 9 is a schematic structural diagram of a point cloud decoding processing apparatus according to an embodiment of this application;
FIG. 10 is a schematic structural diagram of an electronic device according to an embodiment of this application; and
FIG. 11 is another schematic structural diagram of an electronic device according to an embodiment of this application.

## DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1:

including A and not including B; scheme 2: including B and not including A; and scheme 3: including both A and B. The character "/" generally indicates that the associated objects have an "or" relationship.

Before the technical solutions according to the embodiments of this application are described, the meanings of some terms therein are first explained.

Point cloud (Point Cloud): A point cloud refers to a set of discrete points irregularly distributed in space that express the spatial structure and surface attributes of a three-dimensional object or three-dimensional scene. Point clouds can be divided into different categories according to different classification standards. For example, in terms of the acquisition method of point clouds, point clouds can be divided into dense point clouds and sparse point clouds. For another example, in terms of the temporal type of point clouds, point clouds can be divided into static point clouds and dynamic point clouds.

Point cloud data (Point Cloud Data): The geometry coordinate information and attribute information of each point in a point cloud together constitute point cloud data. The geometry coordinate information can also be called three-dimensional position information. The geometry coordinate information of a point in a point cloud refers to the spatial coordinates $(x, y, z)$ of the point, which may include coordinate values of the point in all coordinate axis directions of a three-dimensional coordinate system, for example, the coordinate value x in an X-axis direction, the coordinate value y in a Y-axis direction, and the coordinate value z in a Z-axis direction. The attribute information of a point in a point cloud may include at least one of the following: color information, material information, and laser reflection intensity information (which may also be called reflectance). Usually, all points in a point cloud have the same amount of attribute information. For example, each point in a point cloud may have two types of attribute information: color information and laser reflection intensity. For another example, each point in a point cloud may have three types of attribute information: color information, material information, and laser reflection intensity information.

Point cloud encoding (Point Cloud Compression, PCC): Point cloud encoding refers to a process of encoding the geometry coordinate information and attribute information of each point in a point cloud to obtain a compressed bitstream. Point cloud encoding may include two main processes: geometry coordinate information encoding and attribute information encoding. Currently, a point cloud encoding framework that can compress point clouds may be a geometry point cloud compression (Geometry Point Cloud Compression, G-PCC) codec framework or video point cloud compression (Video Point Cloud Compression, V-PCC) codec framework provided by the Moving Picture Experts Group (Moving Picture Experts Group, MPEG), or may be an AVS-PCC codec framework provided by the Audio Video Standard (Audio Video Standard, AVS).

Point cloud decoding: Point cloud decoding refers to a process of decoding a compressed bitstream obtained by point cloud encoding to reconstruct a point cloud. To be specific, it refers to a process of reconstructing the geometry coordinate information and attribute information of each point in a point cloud based on the geometry bitstream and attribute bitstream in a compressed bitstream. After a decoder obtains a compressed bitstream, for the geometry bitstream, entropy decoding is first performed to obtain quantized information of each point in a point cloud, and then de-quantization is performed to reconstruct geometry coordinate information of each point in the point cloud. For the attribute bitstream, entropy decoding is first performed to obtain quantized attribute residual information or quantized transform coefficients of each point in the point cloud; then, de-quantization is performed on the quantized attribute residual information to obtain reconstructed residual information, de-quantization is performed on the quantized transform coefficients to obtain reconstructed transform coefficients, and inverse transform is performed on the reconstructed transform coefficients to obtain reconstructed residual information. The attribute information of each point in the point cloud can be reconstructed based on the reconstructed residual information of each point in the point cloud. The reconstructed attribute information of all points in the point cloud is sequentially matched one-to-one with the reconstructed geometry coordinate information to reconstruct the point cloud.

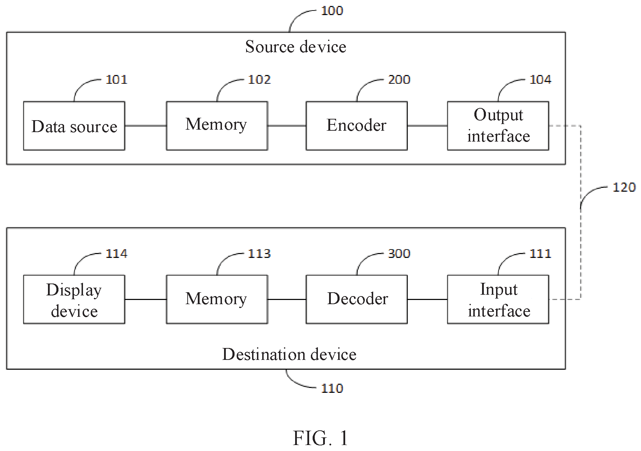

FIG. 1 is a schematic diagram of a codec system 10 according to an embodiment of this application. The technical solutions according to the embodiments of this application involve codec (CODEC) (including encoding or decoding) of point cloud data.

As shown in FIG. 1, the codec system 10 includes a source device 100. The source device 100 provides encoded point cloud data that is decoded and displayed by a destination device 110. Specifically, the source device 100 provides point cloud data to the destination device 110 via a communication medium 120. The source device 100 and the destination device 110 may include any one or more of desktop computers, notebook (that is, laptop) computers, tablet computers, set-top boxes, mobile phones, wearable devices (such as smartwatches or wearable cameras), televisions, cameras, display devices, vehicle user equipment, virtual reality (virtual reality, VR) devices, augmented reality (Augmented reality, AR) devices, mixed reality (mixed reality, MR) devices, digital media players, video game consoles, video conferencing devices, video streaming devices, broadcast receiver devices, broadcast transmitter devices, spacecraft, aircraft, robots, satellites, and the like.

In the example of FIG. 1, the source device 100 includes a data source 101, a memory 102, an encoder 200, and an output interface 104. The destination device 110 includes an input interface 111, a decoder 300, a memory 113, and a display device 114. The source device 100 is an example of an encoding device, and the destination device 110 is an example of a decoding device. In other examples, the source device 100 and the destination device 110 may not include some components shown in FIG. 1, or may include other components not shown in FIG. 1. For example, the source device 100 may obtain point cloud data through an external capture device. Similarly, the destination device 110 may be connected to an external display device interface without including an integrated display device. For another example, the memory 102 and the memory 113 may be external memories.

Although FIG. 1 shows the source device 100 and the destination device 110 as separate devices, in some examples, the two may alternatively be integrated into one device. In such embodiments, the functions corresponding to the source device 100 and the functions corresponding to the destination device 110 may be implemented using the same hardware or software, or separate hardware or software, or any combination thereof.

In some examples, the source device 100 and the destination device 110 may perform one-way data transmission or two-way data transmission. If two-way data transmission is performed, the source device 100 and the destination device 110 may operate in a substantially symmetric manner, that is, each of the source device 100 and the destination device 110 includes an encoder and a decoder.

The data source 101, a source of point cloud data (that is, original, unencoded point cloud data), provides point cloud data to the encoder 200, and the encoder 103 encodes the point cloud data. The source device 100 may include a capture device (such as a camera device, a sensing device, or a scanning device), an archive including previously captured point cloud data, or a feed interface for receiving point cloud data from a data content provider. The camera device may include a common camera, a stereo camera, a light field camera, and the like. The sensing device may include a laser device, a radar device, and the like. The scanning device may include a three-dimensional laser scanning device, and the like. Point cloud data can be obtained by collecting real-world visual scenes through the capture device. As an alternative, the data source 101 may generate computer graphics-based data as source data, or combine real-time data, archived data, and computer-generated data. For example, the data source generates point cloud data based on a virtual object (such as a virtual three-dimensional object and virtual three-dimensional scenes obtained through three-dimensional modeling).

The encoder 200 encodes captured, pre-captured, or computer-generated data. The encoder 200 may rearrange the point cloud data, changing from the received order (sometimes called "display order") to the encoding order. The encoder 200 may generate a bitstream including the encoded point cloud data. The source device 100 may then output the encoded point cloud data to the communication medium 120 via the output interface 104, for reception or retrieval by, for example, the input interface 111 of the destination device 110.

The memory 102 of the source device 100 and the memory 113 of the destination device 110 represent general-purpose memories. In some examples, the memory 102 may store raw data from the data source 101, and the memory 113 may store decoded point cloud data from the decoder 300. Additionally or alternatively, the memories 102 and 113 may respectively store software instructions executable by, for example, the encoder 200 and the decoder 300. Although in this example, the memory 102 and the memory 113 are shown separately from the encoder 200 and the decoder 300, it should be understood that the encoder 200 and the decoder 300 may also include internal memories for functionally similar or equivalent purposes. If the encoder 200 and the decoder 300 are deployed on a same hardware device, the memory 102 and the memory 113 may be a same memory. In addition, the memories 102 and 113 may store, for example, encoded point cloud data output from the encoder 200 and input to the decoder 300. In some examples, portions of the memories 102 and 113 may be allocated as one or more point cloud buffers, such as for storing raw, decoded, or encoded point cloud data.

In some examples, the source device 100 may output encoded data from the output interface 104 to the memory 113. Similarly, the destination device 110 may access the encoded data from the memory 113 via the input interface 111. The memory 113 or the memory 102 may include any one of various distributed or locally accessible data storage media, such as a hard drive, a Blu-ray disc, a digital versatile disc (Digital Versatile Disc, DVD), a compact disc read-only memory (Compact Disc Read-Only Memory, CD-ROM), a flash memory, a volatile or non-volatile memory, or any other suitable digital storage medium for storing encoded point cloud data.

The output interface 104 may include any type of medium or device capable of sending encoded point cloud data from the source device 100 to the destination device 110. For example, the output interface 104 may include a transmitter or transceiver configured to directly send encoded point cloud data from the source device 100 to the destination device 110 in real time, such as an antenna. The encoded point cloud data may be modulated according to a communication standard of a wireless communication protocol and sent to the destination device 110.

The communication medium 120 may include a transient medium, such as wireless broadcast or wired network transmission. For example, the communication medium 120 may include a radio frequency (radio frequency, RF) spectrum or one or more physical transmission lines (for example, cables). The communication medium 120 may form a part of a packet-based network (such as a local area network, a wide area network, or a global network such as the Internet). The communication medium 120 may also take the form of a storage medium (for example, a non-transitory storage medium), such as a hard disk, a flash drive, a compact disc, a digital point cloud disc, a Blu-ray disc, a volatile or non-volatile memory, or any other suitable digital storage medium for storing encoded point cloud data.

In some implementations, the communication medium 120 may include a router, a switch, a base station, or any other devices that may be used to facilitate communication from the source device 100 to the destination device 110. For example, a server (not shown) may receive encoded point cloud data from the source device 100 and provide it to the destination device 110, such as providing it to the destination device 110 through network transmission. The server may include a web server (for example, for a website), a server configured to provide file transfer protocol services (such as file transfer protocol (File Transfer Protocol, FTP) or file delivery over unidirectional transport (File Delivery Over Unidirectional Transport, FLUTE) protocol), a content delivery network (content delivery network, CDN) device, a hypertext transfer protocol (Hypertext Transfer Protocol, HTTP) server, a multimedia broadcast multicast service (Multimedia Broadcast Multicast Service, MBMS) or evolved MBMS (evolved Multimedia Broadcast Multicast Service, eMBMS) server, or a network attached storage (Network-attached storage, NAS) device. The server may implement one or more HTTP streaming protocols, such as MPEG media transport (MPEG Media Transport, MMT) protocol, dynamic adaptive streaming over HTTP (Dynamic Adaptive Streaming over HTTP, DASH) protocol, HTTP live streaming (HTTP Live Streaming, HLS) protocol, or real time streaming protocol (Real Time Streaming Protocol, RTSP).

The destination device 110 may access the encoded point cloud data from the server, for example, through a wireless channel (for example, a wireless fidelity (Wireless Fidelity, WIFI) connection) or a wired connection (for example, a digital subscriber line (Digital Subscriber Line, DSL), or a cable modem) for accessing the encoded point cloud data stored on the server.

The output interface 104 and the input interface 111 may represent wireless transmitters/receivers, modems, wired networking components (for example, Ethernet cards), wireless communication components operating according to IEEE 802.11 standards or IEEE 802.15 standards (for example, ZigBee$^{TM}$ and Bluetooth standards), or other physical components. In an example that the output interface 104 and the input interface 111 include wireless components, the output interface 104 and the input interface 111 may be configured to transfer data, such as encoded point cloud data, over WIFI, Ethernet, or cellular networks (such as the $4^{th}$ generation ($4^{th}$ Generation, 4G) communication system, long term evolution (Long Term Evolution, LTE), advanced LTE, the $5^{th}$ generation ($5^{th}$ Generation, 5G) communication system, and the $6^{th}$ generation ($6^{th}$ Generation, 6G) communication system).

The technologies provided in the embodiments of this application may be applied to support, for example, one or more of the following application scenarios: machine perception point cloud, which may be used in scenarios such as an autonomous navigation system, a real-time inspection system, a geographic information system, a visual sorting robot, and a rescue and disaster relief robot; and human eye perception point cloud, which may be used in point cloud application scenarios such as digital cultural heritage, free viewpoint broadcasting, three-dimensional immersive communication, and three-dimensional immersive interaction.

The input interface 111 of the destination device 110 receives an encoded bitstream (bitstream) from the communication medium 120. The encoded bitstream may include high-level syntax elements and encoded data units (for example, sequences, picture groups, pictures, slices, and blocks), where the high-level syntax elements are used to decode the encoded data units to obtain decoded point cloud data. The display device 114 displays the decoded point cloud data to a user. The display device 114 may include a cathode ray tube (Cathode ray tube, CRT), a liquid crystal display (liquid-crystal display, LCD), a plasma display, an organic light-emitting diode (organic light-emitting diode, OLED) display, or other types of display devices. In some examples, the destination device 110 may not have the display device 114, for example, if the decoded point cloud data is used to determine the position of a physical object, the display device 114 may be replaced by a processor.

The encoder 200 and the decoder 300 may be implemented as one or more of various processing circuits. The processing circuit may include a microprocessor, a digital signal processor (Digital Signal Processors, DSP), an application specific integrated circuit (Application Specific Integrated Circuit, ASIC), a field programmable gate array (Field Programmable Gate Arrays, FPGA), a discrete logic, hardware, or any combination thereof. When the technology is implemented wholly or partially in software, the device may store instructions used for software in a suitable non-transitory computer-readable storage medium and execute the instructions in hardware using one or more processors to perform the technology provided in the embodiments of this application.

The following uses the G-PCC and AVS-PCC codec frameworks as examples to describe the basic principles of the encoder 200 and the decoder 300 provided in the embodiments of this application.

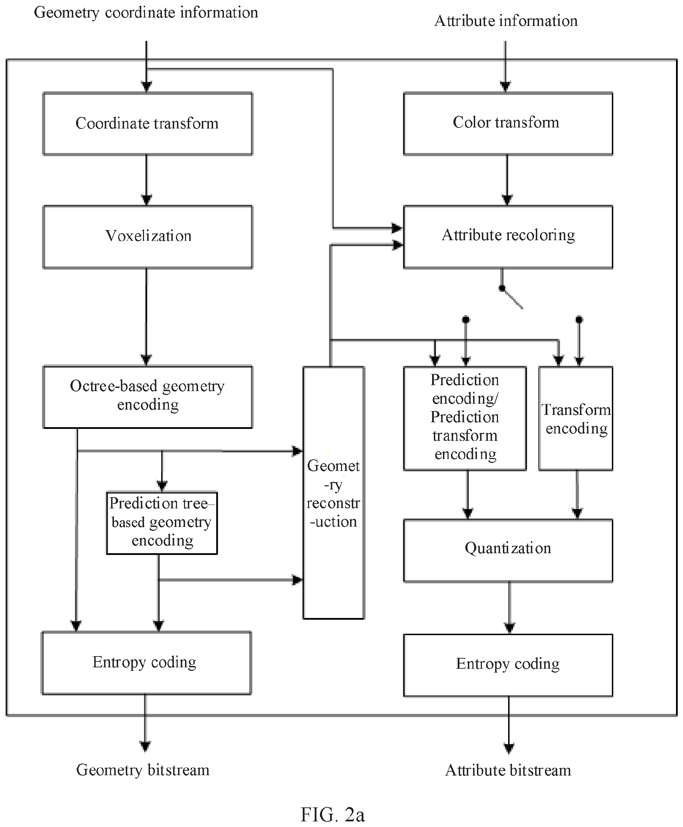

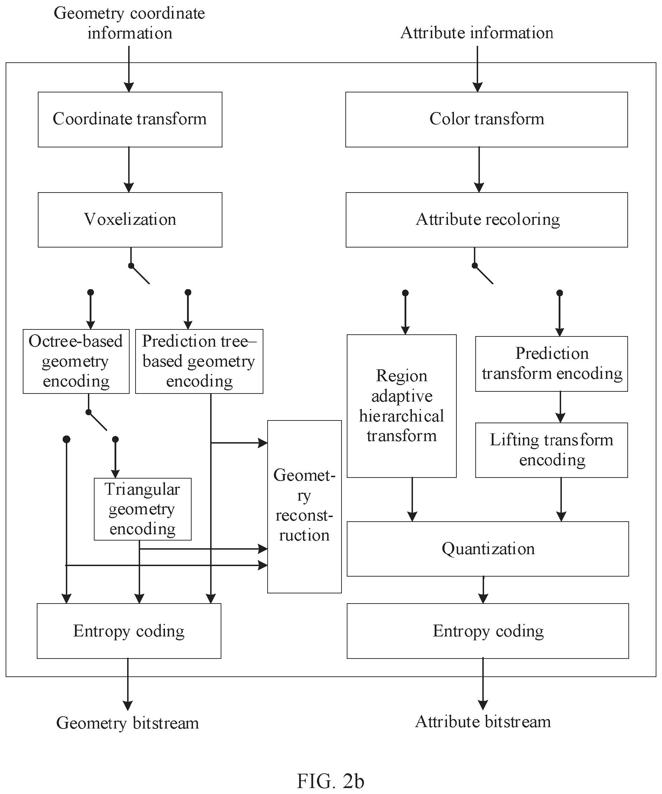

The G-PCC and AVS-PCC codec frameworks are roughly the same. FIG. 2a is a flowchart of an encoding process executed by an encoder based on an AVS-PCC encoding framework. FIG. 2b is a diagram of an encoding process executed by an encoder based on an MPEG G-PCC encoding framework. The above encoders may be the encoder 200 shown in FIG. 1. The above encoding frameworks may generally be divided into a geometry coordinate information encoding process and an attribute information encoding process. In the geometry information encoding process, geometry coordinate information of each point in a point cloud is encoded to obtain a geometry bitstream; in the attribute information encoding process, attribute information of each point in the point cloud is encoded to obtain an attribute bitstream; and the geometry bitstream and the attribute bitstream together constitute a compressed bitstream of the point cloud.

For the geometry information encoding process, the encoding process executed by the encoder 200 is as follows:

1. Pre-processing (Pre-Processing): may include coordinate transform (Transform Coordinates) and voxelization (Voxelize). Through scaling and translation operations, pre-processing is to convert point cloud data in three-dimensional space into an integer form and moves its minimum geometry position to the coordinate origin. In some examples, the encoder 200 may not perform pre-processing.

2. Geometry encoding: For the AVS-PCC encoding framework, geometry encoding includes two modes: octree (Octree)-based geometry encoding and prediction tree-based geometry encoding. For the G-PCC encoding framework, geometry encoding includes three modes: octree-based geometry encoding, trisoup (Trisoup)-based geometry encoding, and prediction tree-based prediction encoding.

Octree-based geometry encoding: An octree is a tree data structure that uniformly partitions a preset bounding box (bounding box) in a three-dimensional space, with each node having eight child nodes. By using "1" and "0" to indicate whether each child node of the octree is occupied or not, occupancy code information (Occupancy Code) is obtained as a bitstream for point cloud geometry information.

Prediction tree-based geometry encoding: A prediction tree is generated using a prediction strategy. Starting from the root node of the prediction tree, each node is traversed, and the residual coordinate value corresponding to each traversed node is encoded.

Trisoup-based geometry encoding: A point cloud is partitioned into blocks of a certain size. The intersection points (referred to as a vertex) of the point cloud surface with the edges of the blocks are located. Geometry information compression is implemented by encoding whether there are intersection points on each edge of the block and the positions of the intersection points.

3. Geometry entropy encoding (Geometry Entropy Encoding): Statistical compression encoding is performed on the occupancy code information of the octree, the prediction residual information of the prediction tree, and the vertex information of the trisoup representation, and finally a binarized (0 or 1) compressed bitstream is output. Statistical encoding is a lossless encoding method that can effectively reduce the bit rate required to represent the same signal. A commonly used statistical encoding method is context-based adaptive binary arithmetic coding (Content-based Adaptive Binary Arithmetic Coding, CABAC).

4. Geometry Reconstruction: The geometry information obtained after geometry encoding is decoded and reconstructed.

For the attribute information encoding process, the encoding process executed by the encoder 200 is as follows:

1. Color transform: Transform is used to transform color information of an attribute to a different domain, for example, the color information may be transformed from the RGB color space to the YCbCr color space.

2. Attribute recoloring (Recoloring): In the case of lossy encoding, after geometry coordinate information encoding, the encoder needs to decode and reconstruct the geometry information, that is, restore the geometry information of each point in the point cloud. In the original point cloud, the attribute information corresponding to one or more neighboring points is found as the attribute information of the reconstructed point.

In some examples, the encoder 200 may not perform color transform or attribute recoloring.

3. Attribute information processing: In AVS-PCC, attribute information processing may include three modes: prediction (Prediction) encoding, transform (Transform) encoding, and prediction and transform (Prediction&Transform) encoding. These three encoding modes may be used under different conditions.

Prediction encoding means: determining, from encoded points, a neighbor point of a to-be-encoded point as a prediction point based on information such as a distance or spatial relationship, and calculating predicted attribute information of the to-be-encoded point based on attribute information of the prediction point according to a preset rule; calculating a difference between true attribute information and the predicted attribute information of the to-be-encoded point as attribute residual information, and performing quantization, transform (optional), and entropy coding on the attribute residual information.

Transform encoding means: grouping and transforming attribute information using a transform method such as discrete cosine transform (Discrete Cosine Transform, DCT) or Haar transform (Haar Transform, Haar), and quantizing transform coefficients; performing de-quantization and inverse transform to obtain reconstructed attribute information; calculating a difference between true attribute information and the reconstructed attribute information to obtain attribute residual information, and quantizing the attribute residual information; and performing entropy coding on the quantized transform coefficients and attribute residuals.

Prediction and transform encoding means: transforming the attribute residual information obtained by prediction, and performing quantization and entropy coding on transform coefficients.

In MPEG G-PCC, attribute information processing may include three modes: prediction transform (Prediction

# EP 4 787 859 A1

Transform) encoding, lifting transform (Lifting Transform) encoding, and region adaptive hierarchical transform (Region Adaptive Hierarchical Transform, RAHT) encoding. These three encoding modes may be used under different conditions.

Prediction transform encoding means: selecting a subset of points based on distance, partitioning a point cloud into multiple different levels of detail (Level of Detail, LoD) to implement multi-LoD point cloud representation from coarse to fine. Prediction from bottom to top can be implemented between adjacent layers, that is, the attribute information of points introduced into the fine layer is predicted from neighboring points at the coarse layer to obtain corresponding attribute residual information. The points at the bottom layer are encoded as reference information.

Lifting transform encoding means: introducing a weight update strategy for neighboring points based on prediction between adjacent LoD layers, to finally obtain the predicted attribute information of each point and obtain the corresponding attribute residual information.

Region adaptive hierarchical transform encoding means: transforming attribute information through RAHT to transform a signal into the transform domain, where the resulting signal is called a transform coefficient.

4. Attribute information quantization (Attribute Quantization): The degree of quantization fineness is typically determined by the quantization parameter. The transform coefficients or attribute residual information obtained by attribute information processing are quantized, and entropy coding is performed on the quantized results. For example, in prediction transform encoding and lifting transform encoding, entropy coding is performed on the quantized attribute residual information; in RAHT, entropy coding is performed on the quantized transform coefficients.

5. Entropy coding (Entropy Coding): Typically, the quantized attribute residual information and/or transform coefficients are finally compressed using run length coding (Run Length Coding) and arithmetic coding (Arithmetic Coding). Information such as the corresponding encoding mode and quantization parameter is also encoded using an entropy encoder.

The encoder 200 performs encoding processing on the geometry coordinate information of each point in the point cloud to obtain a geometry bitstream, and performs encoding processing on the attribute information of each point in the point cloud to obtain an attribute bitstream. The encoder 200 may transmit both the geometry bitstream and attribute bitstream obtained through encoding to the decoder 300.

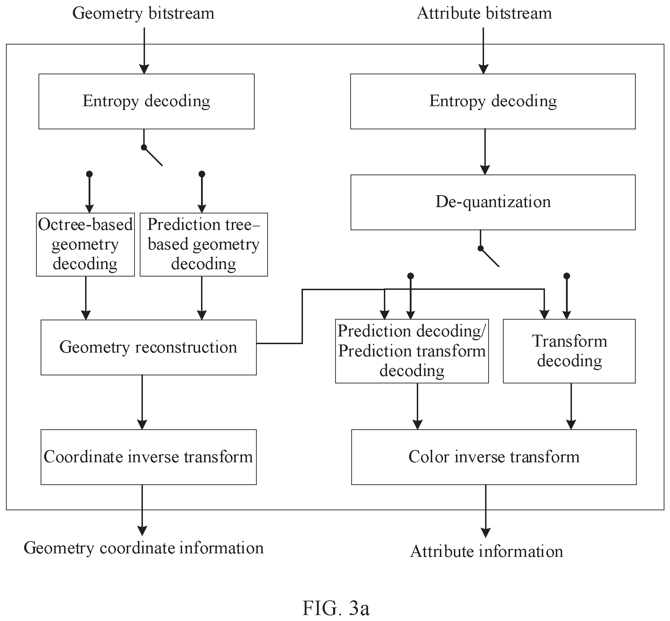

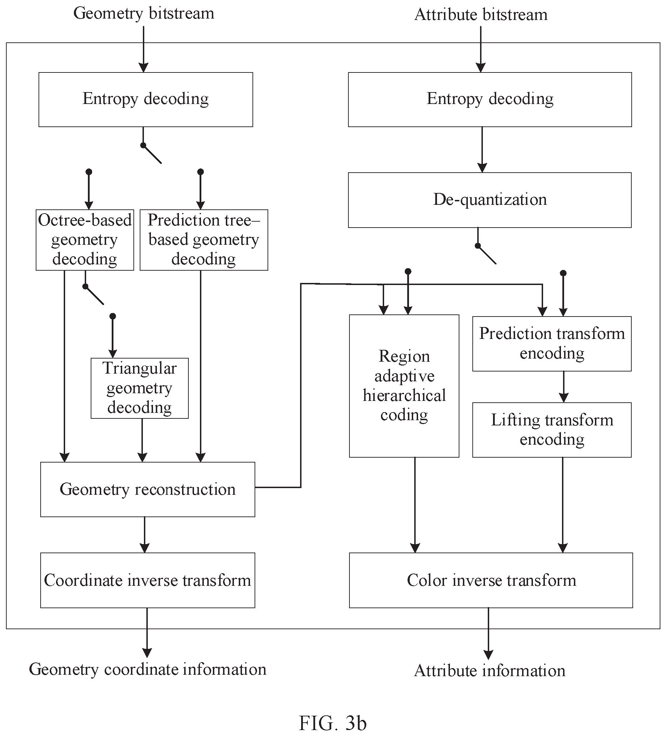

FIG. 3a is a flowchart of a decoding process executed by a decoder based on an AVS-PCC decoding framework. FIG. 3b is a diagram of a decoding process executed by a decoder based on an MPEG G-PCC decoding framework. The above decoders may be the decoder 300 shown in FIG. 1. After receiving a compressed bitstream (that is, an attribute bitstream and a geometry bitstream) transmitted by the encoder 200, the decoder 300 performs decoding processing on the geometry bitstream to reconstruct geometry coordinate information of each point in a point cloud, and performs decoding processing on the attribute bitstream to reconstruct attribute information of each point in the point cloud.

The decoding process executed by the decoder 300 is as follows:

1. Entropy decoding (Entropy Decoding): Entropy decoding is separately performed on a geometry bitstream and an attribute bitstream to obtain geometry syntax elements and attribute syntax elements.

2. Geometry decoding: For the AVS-PCC encoding framework, geometry decoding includes two modes: octree (Octree)-based geometry decoding and prediction tree-based geometry decoding. For the G-PCC encoding framework, geometry decoding includes three modes: octree-based geometry decoding, trisoup (Trisoup)-based geometry decoding, and prediction tree-based prediction decoding.

Octree-based geometry decoding: An octree is reconstructed based on geometry syntax elements parsed from a geometry bitstream.

Prediction tree-based geometry decoding: A prediction tree is reconstructed based on geometry syntax elements parsed from a geometry bitstream.

Trisoup-based geometry decoding: A triangle model is reconstructed based on geometry syntax elements parsed from a geometry bitstream.

3. Geometry reconstruction: Reconstruction is performed to obtain the geometry coordinate information of points in a point cloud.

4. Coordinate inverse transform: Inverse transform is performed on the reconstructed geometry coordinate information to convert the reconstructed coordinates (positions) of points in a point cloud from the transform domain back to the original domain.

5. De-quantization: De-quantization is performed on the attribute syntax elements.

6. Attribute information processing: In AVS-PCC, attribute information processing is to determine the color information of points in a point cloud through prediction or prediction transform on the inverse quantized prediction residuals or prediction residual transform coefficients, or to determine the color information of points in a point cloud through transform on the de-quantized transform coefficients.

In MPEG G-PCC, attribute information processing is to determine the color information of points in a point cloud through RAHT on the de-quantized attribute information, or to determine the color information of points in a point cloud through LOD and inverse lifting on the de-quantized attribute information.

7. Color inverse transform: Color information is transformed from the YCbCr color space to the RGB color space. In some examples, the color inverse transform operation may not be performed.

About G-PCC attribute encoding:

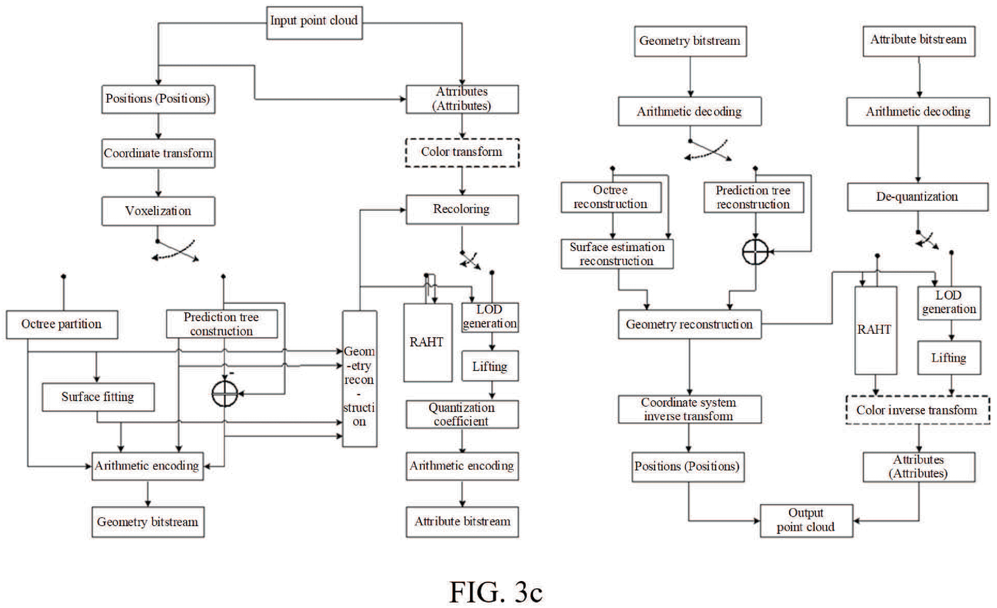

In the G-PCC encoder framework for point clouds, the geometry information and attribute information of a point cloud are encoded separately. As shown in FIG. 3c, G-PCC attribute encoding may be divided into region adaptive Harr transform based on upsampling prediction and lifting transform based on hierarchical structure partitioning.

The region adaptive Harr transform based on upsampling prediction includes the following steps: First, a transform tree structure is constructed. Starting from the bottom layer, an octree structure is constructed from bottom to top. During the process of constructing the transform tree, it is necessary to generate corresponding Morton code information, attribute information, and weight information for the merged nodes. Then, starting from the root node, upsampling prediction and region adaptive Harr transform (Region Adaptive Harr Transform, RAHT) are performed layer by layer from top to bottom. If the current node is the root node, no upsampling prediction is performed, and RAHT transform is directly performed on the attribute information of the node, and then quantization and entropy coding are performed on the obtained direct current (DC) coefficient and alternating current (AC) coefficient. If the current node is not the root node, whether to predict the current node is determined based on the number of grandparent nodes and parent nodes. If prediction is needed, for child nodes of the current to-be-encoded node, weighted prediction is performed on the parent node of the current to-be-encoded child node, the neighboring parent node coplanar and collinear with the current to-be-encoded child node, and the neighboring child node coplanar and collinear with the current to-be-encoded child node to obtain the predicted attribute value of the current to-be-encoded child node, then RAHT transform is separately performed on the predicted attribute value and original attribute value of the current to-be-encoded node, the AC coefficient residual is obtained through calculation, and quantization and entropy coding are performed on the AC coefficient residual. If no prediction is needed, RAHT transform is directly performed on the original attribute value of the current to-be-encoded node, quantization and entropy coding are performed on the obtained AC coefficient. Finally, the attribute bitstream is obtained.

The lifting transform based on hierarchical structure partitioning includes the following steps: First, hierarchical partitioning is performed on the to-be-encoded point cloud through level of detail division to establish a hierarchical structure of the point cloud. In this process, the points at the bottom level are encoded and decoded first, so the points at the bottom level and the reconstructed points at the same level can be used to predict the points at the higher level, thereby implementing progressive encoding and decoding. Then, the points at the bottom level and the same level are used as reference points. For the to-be-encoded point, a search is performed among the reference points to select K closest reference points as prediction reference points, and linear interpolation prediction is performed using the reconstructed attribute values of these K closest neighbors, with the weight being the reciprocal of the Euclidean distances between the closest neighbor points and the to-be-encoded point. Finally, lifting transform is performed, which includes three parts: splitting, prediction, and update. In the splitting stage, the input point cloud data is spatially partitioned into a high-level point cloud and a low-level point cloud. In the prediction stage, the attribute information of the high-level point cloud is predicted using the attribute information of the low-level point cloud to obtain prediction residuals. In the splitting and prediction process, because the prediction strategy in LoD partitioning gives higher weights to the points at the lower LoD layer, it is necessary to define and recursively update the influence weight of each point based on the prediction residual and the distances between the prediction point and its neighbors, so as to finally obtain the bitstream of the attribute information.

The RAHT-based attribute encoding process is as follows:

(1) The point cloud is reordered, and an N-layer RAHT transform tree is constructed using a bottom-up construction method. The bottom layer includes all nodes, and the top layer is a root node layer, including only one node.
(2) Based on the transform tree structure, starting from the root node, upsampling prediction and region adaptive hierarchical transform are performed on each node layer by layer from top to bottom.

If the current node is the root node, no upsampling prediction is performed, and RAHT transform is directly performed on the attribute information of the child nodes of the node to obtain one direct current (DC) coefficient and up to seven alternating current (AC) coefficients.

If the current node is not the root node, assuming that the current node is composed of 2*2*2 child nodes, whether prediction is needed for the child nodes of the current node is determined.

First, when the current node has only one occupied child node, no prediction is performed; when the number of neighboring parent nodes of the current node (that is, the number of grandparent neighbors of the child nodes of the current node) is less than threshold 1, no prediction is performed, and RAHT transform is directly performed on the original attribute information of the child nodes of the current node, and then quantization and entropy coding are performed on the obtained AC coefficients. For example, threshold 1 may be equal to 2. If threshold 1 is satisfied, neighbor search is performed for the child nodes of the current node. The neighbor search range includes: the current node, the neighboring parent node coplanar and collinear with the child nodes of the current node, and the neighboring child node coplanar and collinear with the child nodes of the current node.

When the number of found neighboring parent nodes is less than threshold 2, no prediction is performed, and RAHT transform is directly performed on the original attribute information of the child nodes of the current node to obtain AC transform coefficients. For example, threshold 2 may be equal to 6. If threshold 2 is satisfied, prediction is performed based on the neighbor nodes to obtain the predicted attribute value of the current child node. RAHT transform is separately performed on the original attribute value and the predicted attribute value, and the obtained AC transform coefficients are subtracted to obtain AC residual transform coefficients.

(4) Quantization and entropy coding are performed on the obtained transform coefficients. For the root node, quantization and entropy coding need to be performed on both the DC transform coefficient and AC transform coefficients; for any nodes other than the root node, quantization and entropy coding need to be performed on only the AC transform coefficients or AC residual transform coefficients.

The following details a point cloud encoding processing method, a point cloud decoding processing method, and a related device according to the embodiments of this application through some embodiments and application scenarios thereof with reference to the accompanying drawings.

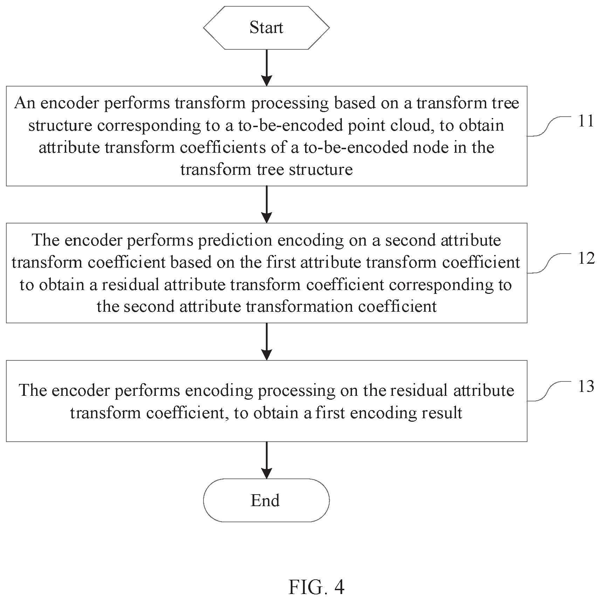

Referring to FIG. 4, FIG. 4 is a flowchart of a point cloud encoding processing method according to an embodiment of this application, which can be applied to an encoder. As shown in FIG. 4, the point cloud encoding processing method includes the following steps.

Step 11: The encoder performs transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space.

The performing transform processing based on a transform tree structure corresponding to a to-be-encoded point cloud may include: obtaining geometry information and attribute information of the to-be-encoded point cloud; generating a multi-layer transform tree structure corresponding to the to-be-encoded point cloud based on the geometry information of the to-be-encoded point cloud; and performing transform or prediction processing on a child node of each to-be-encoded node at each layer based on the transform tree structure, to determine multiple attribute transform coefficients corresponding to each to-be-encoded node.

In addition, each to-be-encoded node may include n (up to 2*2*2) child nodes, and performing transform on its child nodes may obtain one DC coefficient and n-1 AC-related coefficients, where the AC-related coefficients include an AC residual coefficient and an AC coefficient.

In one implementation, the performing transform processing may be performing RAHT processing. The attribute transform coefficients of the to-be-encoded node may include the AC-related coefficients.

Step 12: The encoder performs prediction encoding processing on the second attribute transform coefficient based on the first attribute transform coefficient, to obtain a residual attribute transform coefficient corresponding to the second attribute transform coefficient.

The performing, by the encoder, prediction encoding processing on the second attribute transform coefficient based on the first attribute transform coefficient, to obtain a residual attribute transform coefficient corresponding to the second attribute transform coefficient may include: performing, by the encoder, encoding processing on the first attribute transform coefficient, to obtain a second encoding result; performing, by the encoder, reconstruction processing on the first attribute transform coefficient based on the second encoding result, to obtain a reconstructed value of the first attribute transform coefficient; and performing, by the encoder, prediction encoding processing on the second attribute transform coefficient based on the reconstructed value of the first attribute transform coefficient, to obtain a residual attribute transform coefficient corresponding to the second attribute transform coefficient. Alternatively, the performing, by the encoder, prediction encoding processing on the second attribute transform coefficient based on the first attribute transform coefficient, to obtain a residual attribute transform coefficient corresponding to the second attribute transform coefficient may include: determining, by the encoder, a prediction value of the second attribute transform coefficient based on the first attribute transform coefficient and a target parameter, where the target parameter is a correlation parameter between the first channel and the second channel; and obtaining, by the encoder, a residual attribute transform coefficient corresponding to the second attribute transform coefficient based on the prediction value of the second attribute transform coefficient and the second attribute transform coefficient; where the prediction value of the second attribute transform coefficient may be a product of the first attribute transform coefficient and the target parameter.

Step 13: The encoder performs encoding processing on the residual attribute transform coefficient, to obtain a first encoding result; where

a bitstream of the to-be-encoded point cloud includes the first encoding result.

In addition, the performing encoding processing on the residual attribute transform coefficient, to obtain a first encoding result may include: performing quantization and entropy coding on the residual attribute transform coefficient, to obtain the first encoding result.

In addition, the encoder may further perform encoding processing on the first attribute transform coefficient, to obtain a second encoding result, where the bitstream of the to-be-encoded point cloud may further include the second encoding result.

It should be noted that the first channel and the second channel may be different channels in a color space YCbCr; or the first channel and the second channel may be different channels in a color space YUV; or the first channel and the second channel may be different channels in a color space YIQ. This embodiment does not limit the color space of the first channel and the second channel.

In one implementation, the first channel and the second channel are both chroma channels.

In one implementation, the first channel and the second channel are both chroma channels in a color space YCbCr. For example, the first channel may be a Cb channel, and the second channel may be a Cr channel; or the second channel may be a Cb channel, and the first channel may be a Cr channel.

In one implementation, the first channel is a chroma channel, and the second channel is a luma channel.

In one implementation, the first channel is a chroma channel in a color space YCbCr, and the second channel is a luma channel in the color space YCbCr. For example, the first channel may be a Cb channel, and the second channel may be a Y channel; or the first channel may be a Cr channel, and the second channel may be a Y channel.

In one implementation, the first channel is a luma channel, and the second channel is a chroma channel.

In one implementation, the first channel is a luma channel in a color space YCbCr, and the second channel is a chroma channel in the color space YCbCr. For example, the first channel may be a Y channel, and the second channel may be a Cb channel; or the first channel may be a Y channel, and the second channel may be a Cr channel.

It should be noted that, taking the color space as YCbCr and the first channel and the second channel both being chroma channels (Chroma) as an example, there may be a strong correlation between multi-channel attributes. In GPCC color attribute lossy encoding, a YCbCr component format is used for encoding, where Y is a luma channel (Luma), and Cb and Cr are chroma channels (Chroma). There is a high correlation between the Cb channel and the Cr channel. In the related art, in GPCC RAHT attribute encoding, during transform coefficient encoding, the correlation between chroma channels is not fully utilized, resulting in relatively low encoding efficiency. The embodiments of this application support prediction encoding of the attribute transform coefficients of the Cr channel based on the attribute transform coefficients of the Cb channel, or support prediction encoding of the attribute transform coefficients of the Cb channel based on the attribute transform coefficients of the Cr channel. The correlation between chroma channels is utilized to perform prediction encoding on the attribute transform coefficients, thereby improving encoding efficiency.

In the embodiments of this application, the encoder performs transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space; the encoder performs prediction encoding processing on the second attribute transform coefficient based on the first attribute transform coefficient, to obtain a residual attribute transform coefficient corresponding to the second attribute transform coefficient; and the encoder performs encoding processing on the residual attribute transform coefficient, to obtain a first encoding result; where a bitstream of the to-be-encoded point cloud includes the first encoding result. In this way, prediction encoding processing is performed on the second attribute transform coefficient based on the first attribute transform coefficient corresponding to the first channel, to obtain the residual attribute transform coefficient corresponding to the second attribute transform coefficient, and encoding processing is performed on the residual attribute transform coefficient to obtain the first encoding result. Compared to directly encoding the second attribute transform coefficient corresponding to the second channel, this can implement further compression encoding through a correlation between color space channels, thereby improving encoding efficiency.

Optionally, the performing, by the encoder, prediction encoding processing on the second attribute transform coefficient based on the first attribute transform coefficient, to obtain a residual attribute transform coefficient corresponding to the second attribute transform coefficient includes:

performing, by the encoder, encoding processing on the first attribute transform coefficient, to obtain a second encoding result;

performing, by the encoder, reconstruction processing on the first attribute transform coefficient based on the second encoding result, to obtain a reconstructed value of the first attribute transform coefficient; and

performing, by the encoder, prediction encoding processing on the second attribute transform coefficient based on the reconstructed value of the first attribute transform coefficient, to obtain the residual attribute transform coefficient corresponding to the second attribute transform coefficient.

The encoder may perform quantization and entropy coding on the first attribute transform coefficient, to obtain the second encoding result.

In addition, the encoder may perform de-quantization on the second encoding result to reconstruct and obtain the reconstructed value of the first attribute transform coefficient.

In addition, the performing, by the encoder, prediction encoding processing on the second attribute transform coefficient based on the reconstructed value of the first attribute transform coefficient, to obtain the residual attribute transform coefficient corresponding to the second attribute transform coefficient may include: determining, by the encoder, a prediction value of the second attribute transform coefficient based on the reconstructed value of the first attribute transform coefficient and a target parameter, where the target parameter is a correlation parameter between the first channel and the second channel; and obtaining, by the encoder, the residual attribute transform coefficient corresponding to the second attribute transform coefficient based on the prediction value of the second attribute transform coefficient and the second attribute transform coefficient.

In this implementation, the encoder performs prediction encoding processing on the second attribute transform coefficient based on the reconstructed value of the first attribute transform coefficient, to obtain the residual attribute transform coefficient corresponding to the second attribute transform coefficient, and the encoder performs encoding processing on the residual attribute transform coefficient to obtain the first encoding result. In this way, since a decoder obtains the reconstructed value of the first attribute transform coefficient when decoding the first attribute transform coefficient, the decoder can decode the residual attribute transform coefficient corresponding to the second attribute transform coefficient through the reconstructed value of the first attribute transform coefficient to obtain the second attribute transform coefficient. During prediction encoding or decoding of the second attribute transform coefficient, both the encoder and the decoder use the reconstructed value of the first attribute transform coefficient, thereby achieving consistency between the prediction encoding at the encoder and the prediction decoding at the decoder.

Optionally, the performing, by the encoder, prediction encoding processing on the second attribute transform coefficient based on the reconstructed value of the first attribute transform coefficient, to obtain the residual attribute transform coefficient corresponding to the second attribute transform coefficient includes:

determining, by the encoder, a prediction value of the second attribute transform coefficient based on the reconstructed value of the first attribute transform coefficient and a target parameter, where the target parameter is a correlation parameter between the first channel and the second channel; and

obtaining, by the encoder, the residual attribute transform coefficient corresponding to the second attribute transform coefficient based on the prediction value of the second attribute transform coefficient and the second attribute transform coefficient.

The prediction value of the second attribute transform coefficient may be a product of the reconstructed value of the first attribute transform coefficient and the target parameter; or the prediction value of the second attribute transform coefficient may be a sum of a product of the reconstructed value of the first attribute transform coefficient and the target parameter and a first preset value; or the prediction value of the second attribute transform coefficient may be a difference between a product of the reconstructed value of the first attribute transform coefficient and the target parameter and a first preset value; or the like. This embodiment does not limit the specific implementation of determining the prediction value of the second attribute transform coefficient based on the reconstructed value of the first attribute transform coefficient and the target parameter.

In addition, the residual attribute transform coefficient corresponding to the second attribute transform coefficient may be a difference between the second attribute transform coefficient and the prediction value of the second attribute transform coefficient; or the residual attribute transform coefficient corresponding to the second attribute transform coefficient may be a sum of a difference between the second attribute transform coefficient and the prediction value of the second attribute transform coefficient and a second preset value; or the residual attribute transform coefficient corresponding to the second attribute transform coefficient may be a difference between a difference between the second attribute transform coefficient and the prediction value of the second attribute transform coefficient and a second preset value; or the like. This embodiment does not limit the specific implementation of obtaining the residual attribute transform coefficient corresponding to the second attribute transform coefficient based on the prediction value of the second attribute transform coefficient and the second attribute transform coefficient.

In one implementation, the prediction value of the second attribute transform coefficient is a product of the reconstructed value of the first attribute transform coefficient and the target parameter. The residual attribute transform coefficient corresponding to the second attribute transform coefficient is a difference between the second attribute transform coefficient and the prediction value of the second attribute transform coefficient.

For example, the first channel is a Cb channel, the second channel is a Cr channel, the reconstructed value of the first attribute transform coefficient is $\text{Res}_{\text{Cb\_recon}}$, the target parameter is s, the second attribute transform coefficient is: $\text{Res}_{\text{Cr}}$, and the prediction value of the second attribute transform coefficient is: $\text{Res}_{\text{Cb\_recon}}$. The residual attribute transform coefficient $\text{Res}_{\text{Cr}}$' corresponding to the second attribute transform coefficient is:

$$\text{Res}'_{\text{Cr}} = \text{Res}_{\text{Cr}} - s \cdot \text{Res}_{\text{Cb\_recon}}$$

In this implementation, the encoder determines the prediction value of the second attribute transform coefficient based on the reconstructed value of the first attribute transform coefficient and the target parameter, where the target parameter is a correlation parameter between the first channel and the second channel; and the encoder obtains the residual attribute transform coefficient corresponding to the second attribute transform coefficient based on the prediction value of the second attribute transform coefficient and the second attribute transform coefficient. In this way, the prediction value of the second attribute transform coefficient is predicted from the reconstructed value of the first attribute transform coefficient through the correlation parameter between the first channel and the second channel, and prediction encoding is performed on the second attribute transform coefficient using the correlation between the first channel and the second channel. This can implement further compression encoding through a correlation between color space channels, thereby improving encoding efficiency.

Optionally, the transform tree structure includes multiple layers of nodes, and before the determining, by the encoder, a prediction value of the second attribute transform coefficient based on the reconstructed value of the first attribute transform coefficient and a target parameter, the method further includes:

determining, by the encoder, the target parameter based on original attribute values of multiple nodes at a layer where the to-be-encoded node is located; where
the target parameters corresponding to the multiple nodes at the layer where the to-be-encoded node is located are the same.

The determining, by the encoder, the target parameter based on original attribute values of multiple nodes at layer where the to-be-encoded node is located may include: determining, by the encoder, the target parameter based on attribute transform coefficients of original attribute values of multiple nodes at the layer where the to-be-encoded node is located. The multiple nodes may be all nodes, and the encoder may determine the target parameter based on attribute transform coefficients of original attribute values of all nodes at the layer where the to-be-encoded node is located.

In one implementation, the attribute transform coefficients of the original attribute values may include a fifth attribute transform coefficient corresponding to the first channel and a sixth attribute transform coefficient corresponding to the second channel. The target parameter may be positively correlated with a third value, where the third value is a sum of second products corresponding to all of the attribute transform coefficients of the original attribute values of the multiple nodes, the second product is a product of the fifth attribute transform coefficient and the sixth attribute transform coefficient; and the target parameter is negatively correlated with a fourth value, where the fourth value is a sum of second square values corresponding to all of the attribute transform coefficients of the original attribute values of the multiple nodes, and the second square value is a square value of the fifth attribute transform coefficient.

In one implementation, the target parameter may be a ratio of the third value to the fourth value.

For example, the target parameter may be determined based on original attribute values of all nodes at the layer where the to-be-encoded node is located. The first channel is a Cb channel, the second channel is a Cr channel, and the target parameter s may be:

$$s^{L} = \frac{\sum_{i} \text{AC}^{L}_{\text{ori,Cb,i}} \times \text{AC}^{L}_{\text{ori,Cr,i}}}{\sum_{i}\left(\text{AC}^{L}_{\text{ori,Cb,i}}\right)^{2}}$$

where $s^{L}$ is S corresponding to the nodes at layer L; $\text{AC}^{L}_{\text{ori,Cb,i}}$ is an AC coefficient of a Cb channel obtained by transforming an original attribute value of an i-th node at layer L; $\text{AC}^{L}_{\text{ori,Cr,i}}$ is an AC coefficient of a Cr channel obtained by transforming the original attribute value of the i-th node at layer L, i is a positive integer greater than 0 and less than or equal to n, and n is the total number of nodes at layer L.

In this implementation, the encoder determines the target parameter based on original attribute values of multiple nodes at a layer where the to-be-encoded node is located; where the target parameters corresponding to the multiple nodes at the layer where the to-be-encoded node is located are the same. In this way, the correlation parameter between the first channel and the second channel is determined through the original attribute values of multiple nodes at the layer where the to-be-encoded node is located, better reflecting the channel correlation of the attribute transform coefficients corresponding to the nodes at the layer where the to-be-encoded node is located. In addition, the target parameters corresponding to the multiple nodes at the layer where the to-be-encoded node is located are the same, so that the target parameters corresponding to multiple nodes can be determined at the same time, reducing the amount of computation, thereby further improving encoding efficiency.

Optionally, the bitstream of the to-be-encoded point cloud further includes an encoding result of the target parameter.

In this implementation, the bitstream of the to-be-encoded point cloud further includes the encoding result of the target parameter, thereby supporting the decoder in decoding the encoding result of the target parameter in the bitstream to obtain the target parameter. In this way, the decoder can determine the prediction value of the second attribute transform coefficient based on the reconstructed value of the first attribute transform coefficient and the target parameter, and obtain the reconstructed value of the second attribute transform coefficient based on the prediction value of the second attribute transform coefficient and the reconstructed value of the residual attribute transform coefficient.

Optionally, before the determining, by the encoder, a prediction value of the second attribute transform coefficient based on the reconstructed value of the first attribute transform coefficient and a target parameter, the method further includes:

performing, by the encoder, reconstruction processing on at least one target attribute transform coefficient, to obtain a reconstructed value of the at least one target attribute transform coefficient, where the target attribute transform coefficient is an encoded attribute transform coefficient; and

determining, by the encoder, the target parameter corresponding to the to-be-encoded node based on the reconstructed value of the at least one target attribute transform coefficient.

The encoder may perform quantization and de-quantization processing on at least one target attribute transform coefficient to reconstruct and obtain the reconstructed value of the at least one target attribute transform coefficient.

In addition, the reconstructed value of the target attribute transform coefficient may include a reconstructed value of a third attribute transform coefficient corresponding to the first channel and a reconstructed value of a fourth attribute transform coefficient corresponding to the second channel. The encoder may determine a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient. The encoder may determine a second value, where the second value is a sum of first square values corresponding to all of the at least one target attribute transform coefficient, and the first square value is a square value of the reconstructed value of the third attribute transform coefficient corresponding to the target attribute transform coefficient. The encoder may determine the target parameter corresponding to the to-be-encoded node based on the first value and the second value.

The target parameter corresponding to the to-be-encoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

It should be noted that for the to-be-encoded node, one target parameter can be calculated for each attribute transform coefficient of the to-be-encoded node; or t child nodes of the to-be-encoded node may be grouped into one group, and one target parameter is calculated for each group, where t may be 1, or may be an integer greater than 1.

In this implementation, the encoder performs reconstruction processing on at least one target attribute transform coefficient, to obtain a reconstructed value of the at least one target attribute transform coefficient, where the target attribute transform coefficient is an encoded attribute transform coefficient; and the encoder determines the target parameter corresponding to the to-be-encoded node based on the reconstructed value of the at least one target attribute transform coefficient. In this way, the correlation parameter between the first channel and the second channel is determined through the reconstructed value of the at least one target attribute transform coefficient. Since the decoder can decode the attribute transform coefficient to obtain the reconstructed value of the attribute transform coefficient, the decoder can determine the target parameter corresponding to the to-be-decoded node based on the reconstructed value of the decoded attribute transform coefficient. The encoder does not need to have the target parameter carried in the bitstream, and the encoder also does not need to encode the target parameter, thereby further improving encoding efficiency.

Optionally, the reconstructed value of the target attribute transform coefficient includes a reconstructed value of a third attribute transform coefficient corresponding to the first channel and a reconstructed value of a fourth attribute transform coefficient corresponding to the second channel; and

the target parameter corresponding to the to-be-encoded node is positively correlated with a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or

the target parameter corresponding to the to-be-encoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

The target parameter corresponding to the to-be-encoded node may be a ratio of the first value to the second value; or the target parameter corresponding to the to-be-encoded node may be a sum of the ratio of the first value to the second value and a third preset value; or the target parameter corresponding to the to-be-encoded node may be a difference between the ratio of the first value to the second value and a third preset value; or the like. This embodiment does not limit this.

For example, the target parameter corresponding to the to-be-encoded node is a ratio of the first value to the second value, the first channel is a Cb channel, the second channel is a Cr channel, and the target parameter s may be:

$$s^{L,k} = \frac{\sum_j AC_{rec,Cb}^{L,j} \times AC_{rec,Cr}^{L,j}}{\sum_j (AC_{rec,Cb}^{L,j})^2}$$

where $s^{L,k}$ is an s value corresponding to a k-th node at layer L; $AC_{rec,Cb}^{L,j}$ is an encoded and reconstructed AC coefficient of a Cb channel of a j-th node at layer L; $AC_{rec,Cr}^{L,j}$ is an encoded and reconstructed AC coefficient of a Cr channel of the j-th node at layer L, and j is a positive integer greater than 0 and less than or equal to k.

In this implementation, the target parameter corresponding to the to-be-encoded node is positively correlated with the first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or the target parameter corresponding to the to-be-encoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient. In this way, the target parameter corresponding to the to-be-encoded node can be determined through the reconstructed value of the third attribute transform coefficient corresponding to the first channel of the encoded attribute transform coefficient and the reconstructed value of the fourth attribute transform coefficient corresponding to the second channel, so that the determined target parameter can better reflect the correlation between the first channel and the second channel. In addition, the decoder can determine the target parameter corresponding to the to-be-decoded node based on the reconstructed value of the third attribute transform coefficient corresponding to the first channel and the reconstructed value of the fourth attribute transform coefficient corresponding to the second channel. The encoder does not need to have the target parameter carried in the bitstream, and the encoder also does not need to encode the target parameter, thereby further improving encoding efficiency.

Optionally, the at least one target attribute transform coefficient is any one of the following:

multiple encoded attribute transform coefficients at the layer where the to-be-encoded node is located; and attribute transform coefficients of multiple encoded nodes.

The multiple encoded attribute transform coefficients at the layer where the to-be-encoded node is located may include all encoded attribute transform coefficients at the layer where the to-be-encoded node is located; or the first m encoded attribute transform coefficients at the layer where the to-be-encoded node is located, where m is a positive integer.

In this implementation, the at least one target attribute transform coefficient is multiple encoded attribute transform coefficients at the layer where the to-be-encoded node is located, so that the target parameter can be calculated using a relatively small number of encoded attribute transform coefficients of the nodes that are closer to the to-be-encoded node, thereby calculating the channel correlation parameter of the attribute transform coefficients of the to-be-encoded node more quickly and accurately; or the at least one target attribute transform coefficient is attribute transform coefficients of multiple encoded nodes, so that the target parameter can be calculated using more encoded attribute transform coefficients without being limited to the encoded attribute transform coefficients of the nodes at the layer where the to-be-encoded node is located, thereby calculating the channel correlation parameter of the attribute transform coefficients of the to-be-encoded node more accurately.

Optionally, the target parameter corresponding to the to-be-encoded node is a ratio of the first value to the second value.

Optionally, the reconstructed value of the target attribute transform coefficient includes the reconstructed value of the third attribute transform coefficient corresponding to the first channel and the reconstructed value of the fourth attribute transform coefficient corresponding to the second channel, and the target parameter is:

$$s^{L,k} = \frac{\sum_j AC_{rec,C1}^{L,j} \times AC_{rec,C2}^{L,j}}{\sum_j \left(AC_{rec,C1}^{L,j}\right)^2}$$

where L is a layer number of the layer where the to-be-encoded node is located, k represents that the to-be-encoded node is a k-th node at layer L, $s^{L,k}$ is the target parameter corresponding to the to-be-encoded node; $AC_{rec,C1}^{L,j}$ is a reconstructed value of the third attribute transform coefficient corresponding to a target attribute transform coefficient of a j-th node at layer L; $AC_{rec,C2}^{L,j}$ is a reconstructed value of the fourth attribute transform coefficient corresponding to the target attribute transform coefficient of the j-th node at layer L, and j is a positive integer greater than 0 and less than or equal to k.

Optionally, the first channel and the second channel are both chroma channels; or

> the first channel is a chroma channel, and the second channel is a luma channel; or
> the first channel is a luma channel, and the second channel is a chroma channel.

In this implementation, the first channel and the second channel are both chroma channels, so that further compression encoding can be performed on the attribute transform coefficients corresponding to the chroma channels through the correlation between the chroma channels, thereby improving encoding efficiency; or the first channel is a chroma channel, and the second channel is a luma channel, so that further compression encoding can be performed on the attribute transform coefficients corresponding to the chroma channels through the correlation between the chroma channel and the luma channel, thereby improving encoding efficiency; or the first channel is a luma channel, and the second channel is a chroma channel, so that further compression encoding can be performed on the attribute transform coefficients corresponding to the luma channel through the correlation between the chroma channel and the luma channel, thereby improving encoding efficiency.

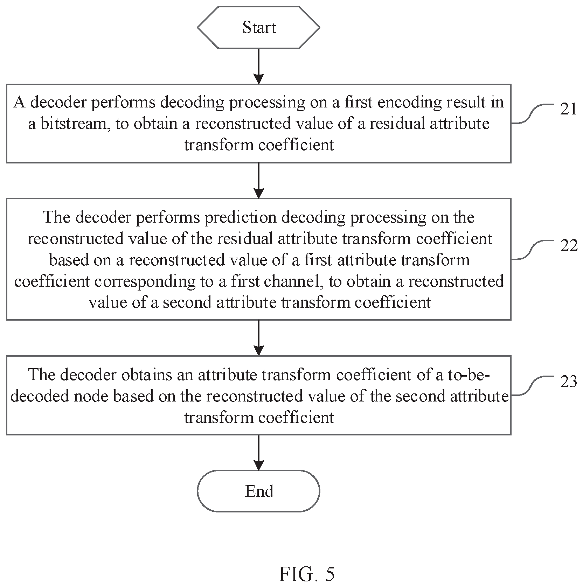

Referring to FIG. 5, FIG. 5 is a flowchart of a point cloud decoding processing method according to an embodiment of this application, which can be applied to a decoder. As shown in FIG. 5, the point cloud decoding processing method includes the following steps.

Step 21: The decoder performs decoding processing on a first encoding result in a bitstream, to obtain a reconstructed value of a residual attribute transform coefficient, where the residual attribute transform coefficient is a residual attribute transform coefficient corresponding to a second attribute transform coefficient corresponding to a second channel.

Step 22: The decoder performs prediction decoding processing on the reconstructed value of the residual attribute transform coefficient based on a reconstructed value of a first attribute transform coefficient corresponding to a first channel, to obtain a reconstructed value of the second attribute transform coefficient, where the first channel and the second channel are different channels in a same color space.

Step 23: The decoder obtains an attribute transform coefficient of a to-be-decoded node based on the reconstructed value of the second attribute transform coefficient.

Optionally, the performing, by the decoder, prediction decoding processing on the reconstructed value of the residual attribute transform coefficient based on a reconstructed value of a first attribute transform coefficient corresponding to a first channel, to obtain a reconstructed value of the second attribute transform coefficient includes:

> performing, by the decoder, decoding processing on a second encoding result in the bitstream, to obtain the reconstructed value of the first attribute transform coefficient corresponding to the first channel; and
> performing, by the decoder, prediction decoding processing on the reconstructed value of the residual attribute transform coefficient based on the reconstructed value of the first attribute transform coefficient, to obtain the reconstructed value of the second attribute transform coefficient.

Optionally, the performing, by the decoder, prediction decoding processing on the reconstructed value of the residual attribute transform coefficient based on the reconstructed value of the first attribute transform coefficient, to obtain the reconstructed value of the second attribute transform coefficient includes:

determining, by the decoder, a prediction value of the second attribute transform coefficient based on the reconstructed value of the first attribute transform coefficient and a target parameter, where the target parameter is a correlation parameter between the first channel and the second channel; and

obtaining, by the decoder, the reconstructed value of the second attribute transform coefficient based on the prediction value of the second attribute transform coefficient and the reconstructed value of the residual attribute transform coefficient.

Optionally, before the determining, by the decoder, a prediction value of the second attribute transform coefficient based on the reconstructed value of the first attribute transform coefficient and a target parameter, the method further includes:

decoding, by the decoder, an encoding result of the target parameter in the bitstream, to obtain the target parameter.

Optionally, the transform tree structure includes multiple layers of nodes, and the target parameters corresponding to multiple nodes at a layer where the to-be-decoded node is located are the same.

Optionally, before the determining, by the decoder, a prediction value of the second attribute transform coefficient based on the reconstructed value of the first attribute transform coefficient and a target parameter, the method further includes:

determining, by the decoder, a target parameter corresponding to the to-be-decoded node based on a reconstructed value of at least one target attribute transform coefficient, where the target attribute transform coefficient is a decoded attribute transform coefficient.

Optionally, the reconstructed value of the target attribute transform coefficient includes a reconstructed value of a third attribute transform coefficient corresponding to the first channel and a reconstructed value of a fourth attribute transform coefficient corresponding to the second channel; and

the target parameter corresponding to the to-be-decoded node is positively correlated with a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or

the target parameter corresponding to the to-be-decoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

Optionally, the at least one target attribute transform coefficient is any one of the following:

multiple decoded attribute transform coefficients at the layer where the to-be-decoded node is located; and attribute transform coefficients of multiple decoded nodes.

Optionally, the target parameter corresponding to the to-be-decoded node is a ratio of the first value to the second value.

Optionally, the reconstructed value of the target attribute transform coefficient includes the reconstructed value of the third attribute transform coefficient corresponding to the first channel and the reconstructed value of the fourth attribute transform coefficient corresponding to the second channel, and the target parameter is:

$$ s^{L,k} = \frac{\sum_j AC_{rec,C1}^{L,j} \times AC_{rec,C2}^{L,j}}{\sum_j \left( AC_{rec,C1}^{L,j} \right)^2} $$

where L is a layer number of the layer where the to-be-decoded node is located, k represents that the to-be-decoded node is a k-th node at layer L, $s^{L,k}$ is the target parameter corresponding to the to-be-decoded node; $AC_{rec,C1}^{L,j}$ is a reconstructed value of the third attribute transform coefficient corresponding to a target attribute transform coefficient of a j-th node at layer L; $AC_{rec,C2}^{L,j}$ is a reconstructed value of the fourth attribute transform coefficient corresponding to the target attribute transform coefficient of the j-th node at layer L, and j is a positive integer greater than 0 and less than or equal to k.

Optionally, the first channel and the second channel are both chroma channels; or

the first channel is a chroma channel, and the second channel is a luma channel; or
the first channel is a luma channel, and the second channel is a chroma channel.

It should be noted that for the specific implementation of this embodiment as a decoding side implementation corresponding to the embodiment shown in FIG. 4, reference may be made to the relevant description of the embodiment shown in FIG. 4. To avoid repetition, this embodiment is not described herein, and the same beneficial effects can also be achieved.

The following describes the point cloud encoding processing method and point cloud decoding processing method in the embodiments of this application through two specific embodiments:

Embodiment 1:

This embodiment proposes an algorithm for inter-prediction between chroma components of a point cloud attribute. Specifically, secondary prediction encoding is performed on a transform coefficients of a Cr channel based on a reconstructed transform coefficient of a Cb channel by utilizing a correlation between color chroma channels, thereby achieving the purpose of improving encoding efficiency.

The point cloud encoding processing method at an encoder side includes the following steps.

Step 31: Reorder a point cloud, and construct an N-layer RAHT transform tree using a bottom-up construction method. The bottom layer includes all nodes, and the top layer is a root node layer, including only one node.

Step 32: Based on a transform tree structure, starting from the root node, perform upsampling prediction and region adaptive hierarchical transform on each node layer by layer from top to bottom.

Determine whether a current node needs prediction. The specific prediction method has been described in the description of the foregoing RAHT-based attribute encoding process, and is not repeated herein.

If no prediction is performed, directly perform RAHT transform on original attribute information of child nodes of the current node to obtain AC transform coefficients. If prediction is performed, separately perform RAHT transform on an original attribute value and a predicted attribute value, and subtract the obtained AC transform coefficients to obtain AC residual transform coefficients.

Step 33: For attribute lossy encoding, encode a color attribute using a YCbCr format. For chroma components, let $Res_{Cb}$ and $Res_{Cr}$ be the transform coefficients of the Cb and Cr channels respectively. The transform coefficient of the Cb channel and the transform coefficient of the Cr channel may be approximated by the following relationship:

$$Res_{Cr} \cong s \cdot Res_{Cb}$$

Therefore, first encode the transform coefficient of the Cb channel, then perform quantization and de-quantization to obtain a reconstructed transform coefficient $Res_{Cb\_recon}$ of the reconstructed Cb channel, and perform further processing on the transform coefficient of the Cr channel to obtain $Res_{Cr}$':

$$Res_{Cr}' = Res_{Cr} - s \cdot Res_{Cb\_recon}$$

Perform subsequent quantization and entropy coding on $Res_{Cr}$'.

s is a scalar value. When two channels are correlated, s may be a positive value or a negative value. In some cases, when the two channels may have no obvious correlation, s is 0.

This embodiment does not limit the calculation method of s. A set of fixed s values may be set, or s may be calculated through some known information. The specific calculation methods of s include the following:

First method: The transform tree constructed by RAHT has multiple layers. All the layers are traversed, and one s value is calculated for each layer, stored in LastCompPredCoeff[L], and sent to the bitstream.

Assuming the current layer is layer L, given $AC_{ori,Cb,i}^{L}$ and $AC_{ori,Cr,i}^{L}$, an AC coefficient is calculated by transforming the original attribute values of all nodes at one layer to obtain a value of S corresponding to the nodes at that layer:

$$s^L = \frac{\sum_i AC^L_{ori,Cb,i} \times AC^L_{ori,Cr,i}}{\sum_i \left(AC^L_{ori,Cb,i}\right)^2}$$

where $s^L$ is S corresponding to the nodes at layer L; $AC^L_{ori,Cb,i}$ is an AC coefficient of a Cb channel obtained by transforming an original attribute value of an i-th node at layer L; $AC^L_{ori,Cr,i}$ is an AC coefficient of a Cr channel obtained by transforming the original attribute value of the i-th node at layer L, i is a positive integer greater than 0 and less than or equal to n, and n is the total number of nodes at layer L.

Second method: All layers are traversed. Assuming that the current layer is layer L, the current node k at layer L is composed of 2*2*2 child nodes, and each node can obtain multiple transform coefficients. The s value used for inter-component prediction of the transform coefficients of node k can be calculated from the transform coefficients that have been encoded and reconstructed previously:

$$s^{L,k} = \frac{\sum_j AC^{L,j}_{rec,Cb} \times AC^{L,j}_{rec,Cr}}{\sum_j \left(AC^{L,j}_{rec,Cb}\right)^2}$$

where $s^{L,k}$ is an s value corresponding to a k-th node at layer L; $AC^{L,j}_{rec,Cb}$ is an encoded and reconstructed AC coefficient of a Cb channel of a j-th node at layer L; $AC^{L,j}_{rec,Cr}$ is an encoded and reconstructed AC coefficient of a Cr channel of the j-th node at layer L, and j is a positive integer greater than 0 and less than or equal to k.

It should be noted that one s value can be calculated for each transform coefficient; or n nodes can be grouped, and only one s value is calculated for each group, where n may be 1, or may be an integer greater than 1. Additionally, a range of encoded transform coefficients used to calculate s may be all encoded transform coefficients at a same layer, may be the first m encoded transform coefficients at a same layer, or may be all transform coefficients of the first k encoded nodes.

In addition, the s value determined using the second method may be calculated from the encoded information, and this s value may not be passed into the bitstream.

Embodiment 2:

This embodiment is a scheme at the decoder corresponding to the encoder in Embodiment 1, and this embodiment is a decoder-side scheme for the first method of calculating s in Embodiment 1.

The point cloud decoding processing method at the decoder side includes the following steps.

Step 41: Decode LastCompPredCoeff from a bitstream, that is, a value of s.

Step 42: Obtain to-be-decoded data from the bitstream, and perform entropy decoding and de-quantization on the to-be-decoded data to obtain a reconstructed value of a transform coefficient.

Step 43: Reorder a point cloud, and construct an N-layer RAHT transform tree using a bottom-up construction method. The bottom layer includes all nodes, and the top layer is a root node layer, including only one node.

Step 44: Based on the transform tree structure, starting from the root node, perform upsampling prediction and RAHT inverse transform on each node layer by layer from top to bottom.

Assuming that the current layer is layer L, for the current node at layer L, an s value corresponding to the current layer is obtained from LastCompPredCoeff. Let the reconstructed values of the transform coefficients of Cb and Cr be $Res_{Cb\_recon}$ and $Res_{Cr\_recon}$, respectively. The processed reconstructed value $Res_{Cr\_recon}'$ of the transform coefficient of Cr is:

$$Res_{Cr\_recon}' = Res_{Cr\_recon} + s * Res_{Cb\_recon}$$

First, when the current node has only one occupied child node, no prediction is performed; when the number of neighboring parent nodes of the current node (that is, the number of grandparent neighbors of the child nodes of the current node) is less than threshold 1 (for example, threshold 1 = 2), no prediction is performed, and the reconstructed value of the AC coefficient is obtained from the reconstructed values of the transform coefficients, its DC coefficient may be inherited from the parent node, and RAHT inverse transform is performed to obtain the reconstructed values of the child nodes of the current node.

If threshold 1 is satisfied, neighbor search is performed for the child nodes of the current node. The neighbor search range includes: the current node, the neighboring parent node coplanar and collinear with the child nodes of the current node, and the neighboring child node coplanar and collinear with the child nodes of the current node. When the number of found neighboring parent nodes is less than threshold 2 (for example, threshold 2 = 6), no prediction is performed, and the reconstructed value of the AC coefficient is obtained from the reconstructed values of the transform coefficients, its DC coefficient can be inherited from the parent node, and RAHT inverse transform is performed to obtain the reconstructed values of the child nodes of the current node.

If threshold 2 is satisfied, prediction is performed based on the neighbor nodes to obtain the predicted attribute value of the current child node. Transform is performed on the predicted attribute value to obtain the AC coefficient of the prediction value which is then added to the reconstructed value of the AC residual coefficient to obtain the reconstructed value of the AC coefficient. Its DC coefficient can be inherited from the parent node. RAHT inverse transform is performed to obtain the reconstructed values of the child nodes of the current node.

When traversing proceeds to the bottom layer, the reconstructed attribute values of all nodes are obtained, thereby completing attribute decoding.

Embodiment 3:

This embodiment is a scheme at the decoder corresponding to the encoder in Embodiment 1, and this embodiment is a decoder-side scheme for the second method of calculating s in Embodiment 1.

The point cloud decoding processing method at the decoder side includes the following steps.

Step 51: Obtain to-be-decoded data from a bitstream, and perform entropy decoding and de-quantization on the to-be-decoded data to obtain a reconstructed value of a transform coefficient.

Step 52: Reorder a point cloud, and construct an N-layer RAHT transform tree using a bottom-up construction method. The bottom layer includes all nodes, and the top layer is a root node layer, including only one node.

Step 53: Based on the transform tree structure, starting from the root node, perform upsampling prediction and RAHT inverse transform on each node layer by layer from top to bottom.

Assuming that the current layer is layer L and the current node k at the current layer L is composed of 2*2*2 child nodes, the s value used for inter-component prediction of the transform coefficients of this node is calculated from the transform coefficients of the nodes that have been decoded previously:

$$s^{L,k} = \frac{\sum_j AC_{rec,Cb}^{L,j} \times AC_{rec,Cr}^{L,j}}{\sum_j \left(AC_{rec,Cb}^{L,j}\right)^2}$$

where $s^{L,k}$ is an s value corresponding to a k-th node at layer L; $AC_{rec,Cb}^{L,j}$ is a decoded AC coefficient of a Cb channel of a j-th node at layer L; $AC_{rec,Cr}^{L,j}$ is a decoded AC coefficient of a Cr channel of the j-th node at layer L, and j is a positive integer greater than 0 and less than or equal to k.

It should be noted that one s value can be calculated for each transform coefficient; or n nodes can be grouped, and only one s value is calculated for each group, where n may be 1, or may be an integer greater than 1. Additionally, a range of decoded transform coefficients used to calculate s may be all decoded transform coefficients at a same layer, may be the first m decoded transform coefficients at a same layer, or may be all transform coefficients of the first k decoded nodes.

Let the reconstructed values of the transform coefficients of Cb and Cr be $Res_{Cb\_recon}$ and $Res_{Cr\_recon}$, respectively. The processed reconstructed value $Res_{Cr\_recon}'$ of the transform coefficient of Cr is:

$$Res_{Cr\_recon}' = Res_{Cr\_recon} + s * Res_{Cb\_recon}$$

First, when the current node has only one occupied child node, no prediction is performed; when the number of neighboring parent nodes of the current node (that is, the number of grandparent neighbors of the child nodes of the current node) is less than threshold 1 (for example, threshold 1 = 2), no prediction is performed, and the reconstructed value of the AC coefficient is obtained from the reconstructed values of the transform coefficients. The DC coefficient may be inherited from the parent node, and RAHT inverse transform is performed to obtain the reconstructed values of the child nodes of the current node.

If threshold 1 is satisfied, neighbor search is performed for the child nodes of the current node. The neighbor search range includes: the current node, the neighboring parent node coplanar and collinear with the child nodes of the current node, and the neighboring child node coplanar and collinear with the child nodes of the current node. When the number of found neighboring parent nodes is less than threshold 2 (for example, threshold 2 = 6), no prediction is performed, and the reconstructed value of the AC coefficient is obtained from the reconstructed values of the transform coefficients. The DC coefficient may be inherited from the parent node, and RAHT inverse transform is performed to obtain the reconstructed values of the child nodes of the current node.

If threshold 2 is satisfied, prediction is performed based on the neighbor nodes to obtain the predicted attribute value of the current child node. Transform is performed on the predicted attribute value to obtain the AC coefficient of the prediction value which is then added to the reconstructed value of the AC residual coefficient to obtain the reconstructed value of the AC coefficient. The DC coefficient may be inherited from the parent node, and RAHT inverse transform is performed to obtain the reconstructed values of the child nodes of the current node.

When traversing proceeds to the bottom layer, the reconstructed attribute values of all nodes are obtained, thereby completing attribute decoding.

An embodiment of this application proposes a method for inter-prediction between chroma components of a point cloud attribute, to perform secondary prediction encoding on a transform coefficient of a Cr channel based on a reconstructed transform coefficient of a Cb channel by utilizing a correlation between color chroma channels, thereby achieving the purpose of reducing the bit rate and improving the encoding efficiency.

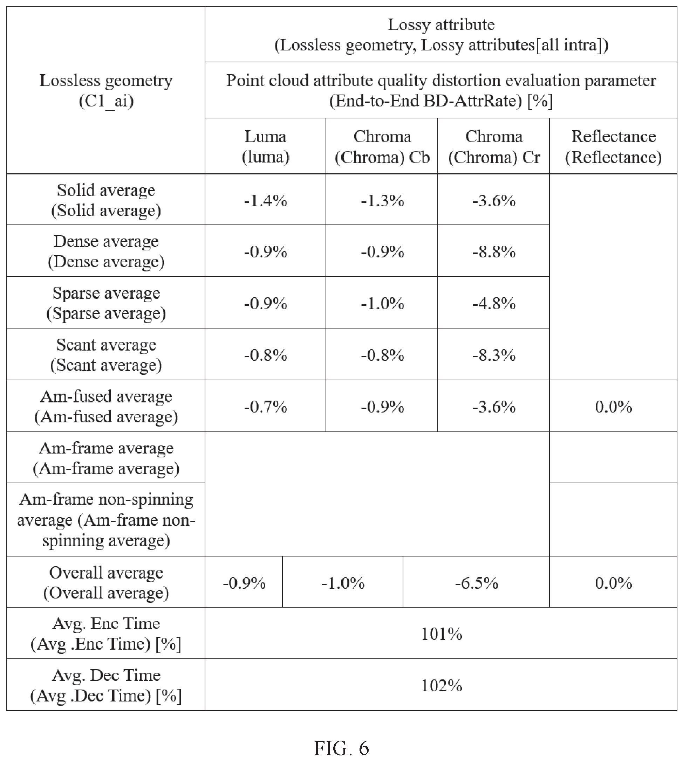

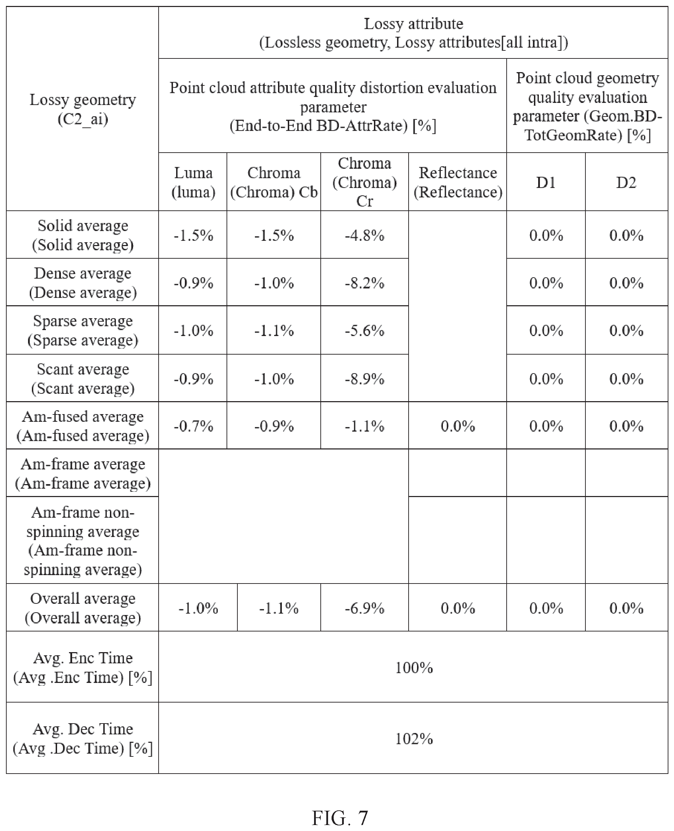

As shown in FIG. 6 and FIG. 7, encoding and decoding using the point cloud encoding processing method and point cloud decoding processing method in the embodiments of this application can reduce the bit rate and improve the encoding efficiency. In FIG. 6 and FIG. 7, the first vertical column represents six categories of point clouds classified by point cloud density, such as solid average (Solid average), dense average (Dense average), and sparse average (Sparse average). Overall average represents the average of the above six categories of point clouds. Avg. Enc Time represents an encoding time, and Avg. Dec Time represents a decoding time. Luma, ChromaCb, ChromaCr, and Reflectance are attribute components. C1_ai and C2_ai are point cloud encoding test conditions. C1_ai represents lossless geometry, lossy attributes (Lossless geometry, Lossy attributes[all intra]); C2_ai represents lossy geometry, lossy attributes (Lossy geometry, Lossy attributes[all intra]). End-to-End BD-AttrRate represents a point cloud attribute quality distortion evaluation parameter. If the End-to-End BD-AttrRate parameter is a negative value, it indicates that overall quality of a point cloud generated through encoding using this embodiment is higher than the overall quality of a point cloud generated through encoding using the related art. It can be seen from FIG. 6 and FIG. 7 that under substantially unchanged encoding time and decoding time, the overall quality of the point cloud generated through encoding using this embodiment is higher than the overall quality of the point cloud generated through encoding using the related art.

It should be noted that the above embodiments can also be used for performing secondary prediction encoding on a transform coefficient of a Cb channel based on a reconstructed transform coefficient of a Cr channel. For example, the information related to the Cb channel and the Cr channel in the above embodiments can be interchanged. The above embodiments can also be used for prediction between luma and chroma components, that is, prediction between a Y channel and a Cb channel, and between a Y channel and a Cr channel. For example, secondary prediction encoding may be performed on a transform coefficient of the Y channel based on a reconstructed transform coefficient of the Cr channel; or secondary prediction encoding may be performed on a transform coefficients of a Y channel based on a reconstructed transform coefficient of a Cb channel; or secondary prediction encoding may be performed on a transform coefficient of a Cr channel based on a reconstructed transform coefficient of a Y channel; or secondary prediction encoding may be performed on a transform coefficient of a Cb channel based on a reconstructed transform coefficient of a Y channel.

It should be noted that the point cloud encoding processing method according to the embodiments of this application may be executed by a point cloud encoding processing apparatus, or a control module for executing the point cloud encoding processing method in the point cloud encoding processing apparatus. In the embodiments of this application, the point cloud encoding processing apparatus executing the point cloud encoding processing method is taken as an example to describe a point cloud encoding processing apparatus according to an embodiment of this application.

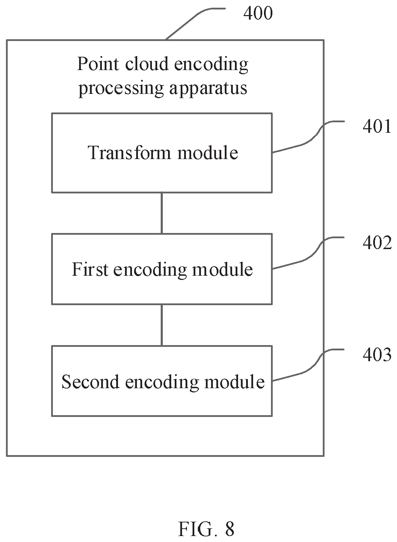

Referring to FIG. 8, FIG. 8 is a structural diagram of a point cloud encoding processing apparatus according to an embodiment of this application. As shown in FIG. 8, the point cloud encoding processing apparatus 400 includes:

a transform module 401 configured to perform transform processing based on a transform tree structure corresponding to a to-be-encoded point cloud, to obtain attribute transform coefficients of a to-be-encoded node in the transform tree structure, where the attribute transform coefficients of the to-be-encoded node include a first attribute transform coefficient corresponding to a first channel and a second attribute transform coefficient corresponding to a second channel, and the first channel and the second channel are different channels in a same color space;

a first encoding module 402 configured to perform prediction encoding processing on the second attribute transform coefficient based on the first attribute transform coefficient, to obtain a residual attribute transform coefficient corresponding to the second attribute transform coefficient; and

a second encoding module 403 configured to perform encoding processing on the residual attribute transform coefficient, to obtain a first encoding result; where
a bitstream of the to-be-encoded point cloud includes the first encoding result.

Optionally, the first encoding module includes:

a first encoding unit configured to perform encoding processing on the first attribute transform coefficient, to obtain a second encoding result;
a reconstruction unit configured to perform reconstruction processing on the first attribute transform coefficient based on the second encoding result, to obtain a reconstructed value of the first attribute transform coefficient; and
a second encoding unit configured to perform prediction encoding processing on the second attribute transform coefficient based on the reconstructed value of the first attribute transform coefficient, to obtain a residual attribute transform coefficient corresponding to the second attribute transform coefficient.

Optionally, the second encoding unit is specifically configured to:

determine a prediction value of the second attribute transform coefficient based on the reconstructed value of the first attribute transform coefficient and a target parameter, where the target parameter is a correlation parameter between the first channel and the second channel; and
obtain the residual attribute transform coefficient corresponding to the second attribute transform coefficient based on the prediction value of the second attribute transform coefficient and the second attribute transform coefficient.

Optionally, the transform tree structure includes multiple layers of nodes, and the apparatus further includes:

a first determining module configured to determine the target parameter based on original attribute values of multiple nodes at a layer where the to-be-encoded node is located; where
the target parameters corresponding to the multiple nodes at the layer where the to-be-encoded node is located are the same.

Optionally, the bitstream of the to-be-encoded point cloud further includes an encoding result of the target parameter.
Optionally, the apparatus further includes:

a reconstruction module configured to perform reconstruction processing on at least one target attribute transform coefficient, to obtain a reconstructed value of the at least one target attribute transform coefficient, where the target attribute transform coefficient is an encoded attribute transform coefficient; and
a second determining module configured to determine the target parameter corresponding to the to-be-encoded node based on the reconstructed value of the at least one target attribute transform coefficient.

Optionally, the reconstructed value of the target attribute transform coefficient includes a reconstructed value of a third attribute transform coefficient corresponding to the first channel and a reconstructed value of a fourth attribute transform coefficient corresponding to the second channel; and

the target parameter corresponding to the to-be-encoded node is positively correlated with a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or
the target parameter corresponding to the to-be-encoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

Optionally, the at least one target attribute transform coefficient is any one of the following:

multiple encoded attribute transform coefficients at the layer where the to-be-encoded node is located; and
attribute transform coefficients of multiple encoded nodes.

Optionally, the target parameter corresponding to the to-be-encoded node is a ratio of the first value to the second value.

Optionally, the reconstructed value of the target attribute transform coefficient includes the reconstructed value of the third attribute transform coefficient corresponding to the first channel and the reconstructed value of the fourth attribute transform coefficient corresponding to the second channel, and the target parameter is:

$$ s^{L,k} = \frac{\sum_j AC_{rec,C1}^{L,j} \times AC_{rec,C2}^{L,j}}{\sum_j \left( AC_{rec,C1}^{L,j} \right)^2} $$

where L is a layer number of the layer where the to-be-encoded node is located, k represents that the to-be-encoded node is a k-th node at layer L, $s^{L,k}$ is the target parameter corresponding to the to-be-encoded node; $AC_{rec,C1}^{L,j}$ is a reconstructed value of the third attribute transform coefficient corresponding to a target attribute transform coefficient of a j-th node at layer L; $AC_{rec,C2}^{L,j}$ is a reconstructed value of the fourth attribute transform coefficient corresponding to the target attribute transform coefficient of the j-th node at layer L, and j is a positive integer greater than 0 and less than or equal to k.

Optionally, the first channel and the second channel are both chroma channels; or

the first channel is a chroma channel, and the second channel is a luma channel; or
the first channel is a luma channel, and the second channel is a chroma channel.

The point cloud encoding processing apparatus in the embodiments of this application may be an apparatus, or an apparatus or electronic device having an operating system, or may be a component in a terminal, an integrated circuit, or a chip. The apparatus or electronic device may be a mobile terminal or a non-mobile terminal. For example, the mobile terminal may include but is not limited to the types of terminals listed above, and the non-mobile terminal may be a server, a network attached storage (Network Attached Storage, NAS), a personal computer (personal computer, PC), a television (television, TV), an automated teller machine, or a self-service machine, which is not specifically limited in the embodiments of this application.

The point cloud encoding processing apparatus according to the embodiments of this application can implement each process implemented by the method embodiment in FIG. 4, with the same technical effects achieved. To avoid repetition, details are not described herein.

It should be noted that the point cloud decoding processing method according to the embodiments of this application may be executed by a point cloud decoding processing apparatus, or a control module for executing the point cloud decoding processing method in the point cloud decoding processing apparatus. In the embodiments of this application, the point cloud decoding processing apparatus executing the point cloud decoding processing method is taken as an example to describe a point cloud decoding processing apparatus according to an embodiment of this application.

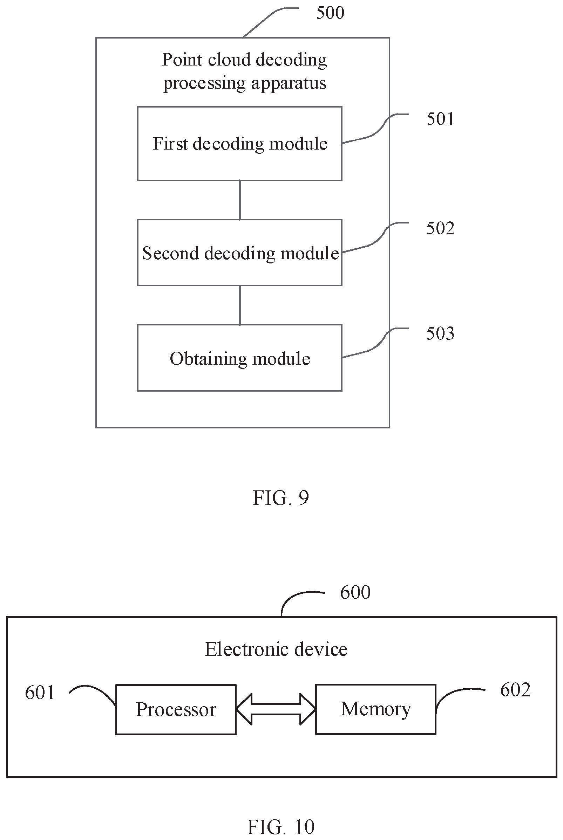

Referring to FIG. 9, FIG. 9 is a structural diagram of a point cloud decoding processing apparatus according to an embodiment of this application. As shown in FIG. 9, the point cloud decoding processing apparatus 500 includes:

a first decoding module 501 configured to perform decoding processing on a first encoding result in a bitstream, to obtain a reconstructed value of a residual attribute transform coefficient, where the residual attribute transform coefficient is a residual attribute transform coefficient corresponding to a second attribute transform coefficient corresponding to a second channel;
a second decoding module 502 configured to perform prediction decoding processing on the reconstructed value of the residual attribute transform coefficient based on a reconstructed value of a first attribute transform coefficient corresponding to a first channel, to obtain a reconstructed value of the second attribute transform coefficient, where the first channel and the second channel are different channels in a same color space; and
an obtaining module 503 configured to obtain an attribute transform coefficient of a to-be-decoded node based on the reconstructed value of the second attribute transform coefficient.

Optionally, the second decoding module includes:

a first decoding unit configured to perform decoding processing on a second encoding result in the bitstream, to obtain the reconstructed value of the first attribute transform coefficient corresponding to the first channel; and

a second decoding unit configured to perform prediction decoding processing on the reconstructed value of the residual attribute transform coefficient based on the reconstructed value of the first attribute transform coefficient, to obtain the reconstructed value of the second attribute transform coefficient.

Optionally, the second decoding unit is specifically configured to:

determine a prediction value of the second attribute transform coefficient based on the reconstructed value of the first attribute transform coefficient and a target parameter, where the target parameter is a correlation parameter between the first channel and the second channel; and

obtain the reconstructed value of the second attribute transform coefficient based on the prediction value of the second attribute transform coefficient and the reconstructed value of the residual attribute transform coefficient.

Optionally, the apparatus further includes:
a third decoding module configured to decode an encoding result of the target parameter in the bitstream, to obtain the target parameter.

Optionally, the transform tree structure includes multiple layers of nodes, and the target parameters corresponding to multiple nodes at a layer where the to-be-decoded node is located are the same.

Optionally, the apparatus further includes:
a determining module configured to determine a target parameter corresponding to the to-be-decoded node based on a reconstructed value of at least one target attribute transform coefficient, where the target attribute transform coefficient is a decoded attribute transform coefficient.

Optionally, the reconstructed value of the target attribute transform coefficient includes a reconstructed value of a third attribute transform coefficient corresponding to the first channel and a reconstructed value of a fourth attribute transform coefficient corresponding to the second channel; and

the target parameter corresponding to the to-be-decoded node is positively correlated with a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or

the target parameter corresponding to the to-be-decoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

Optionally, the at least one target attribute transform coefficient is any one of the following:

multiple decoded attribute transform coefficients at the layer where the to-be-decoded node is located; and
attribute transform coefficients of multiple decoded nodes.

Optionally, the target parameter corresponding to the to-be-decoded node is a ratio of the first value to the second value.

Optionally, the reconstructed value of the target attribute transform coefficient includes the reconstructed value of the third attribute transform coefficient corresponding to the first channel and the reconstructed value of the fourth attribute transform coefficient corresponding to the second channel, and the target parameter is:

$$s^{L,k} = \frac{\sum_j AC_{rec,C1}^{L,j} \times AC_{rec,C2}^{L,j}}{\sum_j \left( AC_{rec,C1}^{L,j} \right)^2}$$

where L is a layer number of the layer where the to-be-decoded node is located, k represents that the to-be-decoded node is a k-th node at layer L, $s^{L,k}$ is the target parameter corresponding to the to-be-decoded node; $AC_{rec,C1}^{L,j}$ is a reconstructed value of the third attribute transform coefficient corresponding to a target attribute transform coefficient of a j-th node at layer L; $AC_{rec,C2}^{L,j}$ is a reconstructed value of the fourth attribute transform coefficient corresponding to the target attribute transform coefficient of the j-th node at layer L, and j is a positive integer greater than 0 and less than or equal to k.

Optionally, the first channel and the second channel are both chroma channels; or

the first channel is a chroma channel, and the second channel is a luma channel; or

the first channel is a luma channel, and the second channel is a chroma channel.

The point cloud decoding processing apparatus in the embodiments of this application may be an apparatus, or an apparatus or electronic device having an operating system, or may be a component in a terminal, an integrated circuit, or a chip. The apparatus or electronic device may be a mobile terminal or a non-mobile terminal. For example, the mobile terminal may include but is not limited to the types of terminals listed above, and the non-mobile terminal may be a server, a network attached storage (Network Attached Storage, NAS), a personal computer (personal computer, PC), a television (television, TV), an automated teller machine, or a self-service machine, which is not specifically limited in the embodiments of this application.

The point cloud decoding processing apparatus according to the embodiments of this application can implement each process implemented by the method embodiment in FIG. 5, with the same technical effects achieved. To avoid repetition, details are not described herein.

Optionally, as shown in FIG. 10, an embodiment of this application further provides an electronic device 600 including a processor 601 and a memory 602, where the memory 602 stores a program or instructions capable of running on the processor 601. For example, in a case that the electronic device 600 is an encoder device, the program or instructions, when executed by the processor 601, implement each step of the foregoing point cloud encoding processing method embodiment, with the same technical effects achieved. In a case that the electronic device 600 is a decoder device, the program or instructions, when executed by the processor 601, implement each step of the foregoing point cloud decoding processing method embodiment, with the same technical effects achieved. To avoid repetition, details are not described herein.

An embodiment of this application further provides an electronic device including: a memory configured to store video data; and a processing circuit configured to implement each step of the embodiments of the foregoing point cloud encoding processing method or point cloud decoding processing method. Optionally, the memory may be the memory 102 or the memory 113 in the embodiment shown in FIG. 1, and the processing circuit may implement the functions of the encoder 200 or the decoder 300 in the embodiments shown in FIGs. 1 to 3.

An embodiment of this application further provides an electronic device including a processor and a communication interface, where the communication interface is coupled to the processor, and the processor is configured to run a program or instructions to implement the steps in the method embodiment shown in FIG. 4 or FIG. 5. This device embodiment corresponds to the foregoing method embodiment, and each implementation process and implementation of the foregoing method embodiment can be applied to this device embodiment, with the same technical effects achieved.

The foregoing electronic device may be a terminal or a device other than a terminal, such as a server or a network attached storage (Network Attached Storage, NAS).

The terminal may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a mixed reality (mixed reality, MR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), a smart home (home devices with wireless communication function, such as a refrigerator, a television, a washing machine, or furniture), a game console, a personal computer (Personal Computer, PC), an automated teller machine, or a self-service machine. The wearable device includes a smartwatch, a smart band, smart earphones, smart glasses, smart jewelry (a smart bracelet, a smart band, a smart ring, a smart necklace, a smart leglet, a smart anklet, and the like), a smart wristband, smart clothing, or the like. The vehicle user equipment may also be called an in-vehicle terminal, an in-vehicle controller, an in-vehicle module, an in-vehicle component, an in-vehicle chip, an in-vehicle unit, and the like. It should be noted that the terminal is not limited to a specific type in the embodiments of this application.

The server may be an independent physical server, or a server cluster or distributed system composed of multiple physical servers, or may be a cloud server, where the cloud server provides basic cloud computing services such as a cloud service, a cloud database, cloud computing, cloud functions, cloud storage, a network service, cloud communication, a middleware service, a domain name service, a security service, a content delivery network (Content Delivery Network, CDN), or a cloud computing service based on a big data and artificial intelligence platform.

For example, the foregoing electronic device may include but is not limited to the types of the source device 100 or the destination device 110 shown in FIG. 1.

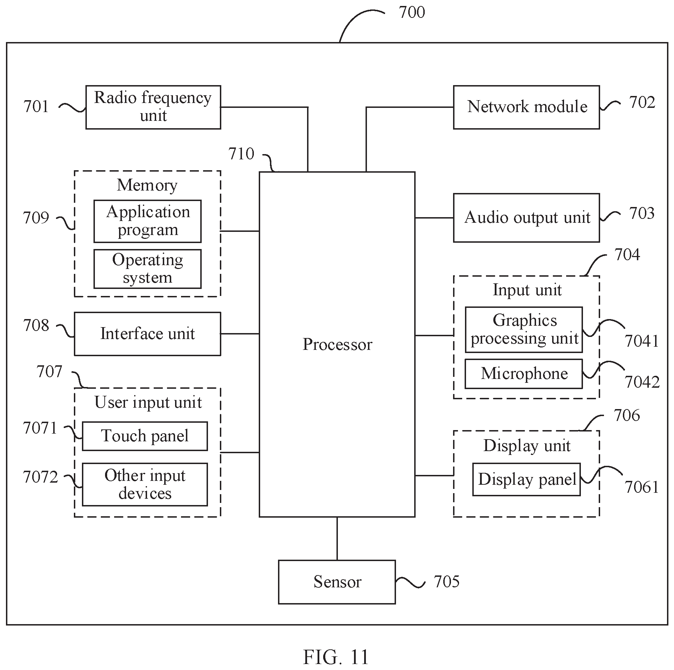

Taking the electronic device being a terminal as an example, FIG. 11 is a schematic diagram of a hardware structure of a terminal implementing an embodiment of this application.

The terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power supply (such as a battery) for supplying power to various components. The power supply may be logically connected to the processor 710 through a power management system, thereby implementing functions such as charging management, discharging management, and power consumption management through the power management system. The terminal structure shown in FIG. 11 does not constitute any limitation on the terminal. The terminal may include more or fewer components than shown in the figure, or a combination of some components, or the components disposed differently. Details are not described herein.

It should be understood that, in the embodiments of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or an on/off key), a trackball, a mouse, and a joystick. Details are not described herein.

In the embodiments of this application, after receiving downlink data from the network-side device, the radio frequency unit 701 can transmit the downlink data to the processor 710 for processing. In addition, the radio frequency unit 701 can send uplink data to the network-side device. Typically, the radio frequency unit 701 includes but is not limited to an antenna, an amplifier, a transceiver, a coupler, a low noise amplifier, and a duplexer.

The memory 709 may be configured to store a software program or instructions and various data. The memory 709 may mainly include a first storage area for storing programs or instructions and a second storage area for storing data. The first storage area may store an operating system, an application program or instructions required by at least one function (for example, a sound play function or an image play function), and the like. Additionally, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 709 in the embodiment of this application includes but is not limited to these and any other suitable types of memory.

The processor 710 may include one or more processing units. Optionally, the processor 710 integrates an application processor and a modem processor. The application processor primarily processes operations involving an operating system, a user interface, an application program, or the like. The modem processor primarily processes radio communication signals, for example, being a baseband processor. It can be understood that the modem processor may alternatively be not integrated into the processor 710.

In a case that the terminal is an encoder:
the processor 710 is configured to:

> perform transform processing based on a transform tree structure corresponding to a to-be-encoded point cloud, to obtain attribute transform coefficients of a to-be-encoded node in the transform tree structure, the attribute transform coefficients of the to-be-encoded node include a first attribute transform coefficient corresponding to a first channel and a second attribute transform coefficient corresponding to a second channel, and the first channel and the second channel are different channels in a same color space;
> perform prediction encoding processing on the second attribute transform coefficient based on the first attribute transform coefficient, to obtain a residual attribute transform coefficient corresponding to the second attribute transform coefficient; and
> perform encoding processing on the residual attribute transform coefficient, to obtain a first encoding result; where a bitstream of the to-be-encoded point cloud includes the first encoding result.

Optionally, the processor 710 is specifically configured to:

perform encoding processing on the first attribute transform coefficient, to obtain a second encoding result;
perform reconstruction processing on the first attribute transform coefficient based on the second encoding result, to obtain a reconstructed value of the first attribute transform coefficient; and
perform prediction encoding processing on the second attribute transform coefficient based on the reconstructed value of the first attribute transform coefficient, to obtain the residual attribute transform coefficient corresponding to the second attribute transform coefficient.

Optionally, the processor 710 is specifically configured to:

determine a prediction value of the second attribute transform coefficient based on the reconstructed value of the first attribute transform coefficient and a target parameter, where the target parameter is a correlation parameter between the first channel and the second channel; and
obtain the residual attribute transform coefficient corresponding to the second attribute transform coefficient based on the prediction value of the second attribute transform coefficient and the second attribute transform coefficient.

Optionally, the transform tree structure includes multiple layers of nodes, and the processor 710 is further configured to:

determine the target parameter based on original attribute values of multiple nodes at a layer where the to-be-encoded node is located; where
the target parameters corresponding to the multiple nodes at the layer where the to-be-encoded node is located are the same.

Optionally, the bitstream of the to-be-encoded point cloud further includes an encoding result of the target parameter.

Optionally, the processor 710 is further configured to:

perform reconstruction processing on at least one target attribute transform coefficient, to obtain a reconstructed value of the at least one target attribute transform coefficient, where the target attribute transform coefficient is an encoded attribute transform coefficient; and
determine the target parameter corresponding to the to-be-encoded node based on the reconstructed value of the at least one target attribute transform coefficient.

Optionally, the reconstructed value of the target attribute transform coefficient includes a reconstructed value of a third attribute transform coefficient corresponding to the first channel and a reconstructed value of a fourth attribute transform coefficient corresponding to the second channel; and

the target parameter corresponding to the to-be-encoded node is positively correlated with a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or
the target parameter corresponding to the to-be-encoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

Optionally, the at least one target attribute transform coefficient is any one of the following:

multiple encoded attribute transform coefficients at the layer where the to-be-encoded node is located; and
attribute transform coefficients of multiple encoded nodes.

Optionally, the target parameter corresponding to the to-be-encoded node is a ratio of the first value to the second value.

Optionally, the reconstructed value of the target attribute transform coefficient includes the reconstructed value of the third attribute transform coefficient corresponding to the first channel and the reconstructed value of the fourth attribute transform coefficient corresponding to the second channel, and the target parameter is:

$$s^{L,k} = \frac{\sum_j AC_{rec,C1}^{L,j} \times AC_{rec,C2}^{L,j}}{\sum_j \left(AC_{rec,C1}^{L,j}\right)^2}$$

where L is a layer number of the layer where the to-be-encoded node is located, k represents that the to-be-encoded node is a k-th node at layer L, $s^{L,k}$ is the target parameter corresponding to the to-be-encoded node; $AC_{rec,C1}^{L,j}$ is a reconstructed value of the third attribute transform coefficient corresponding to a target attribute transform coefficient of a j-th node at layer L; $AC_{rec,C2}^{L,j}$ is a reconstructed value of the fourth attribute transform coefficient corresponding to the target attribute transform coefficient of the j-th node at layer L, and j is a positive integer greater than 0 and less than or equal to k.

Optionally, the first channel and the second channel are both chroma channels; or

the first channel is a chroma channel, and the second channel is a luma channel; or
the first channel is a luma channel, and the second channel is a chroma channel.

In a case that the terminal is a decoder:
the processor 710 is configured to:

perform decoding processing on a first encoding result in a bitstream, to obtain a reconstructed value of a residual attribute transform coefficient, where the residual attribute transform coefficient is a residual attribute transform coefficient corresponding to a second attribute transform coefficient corresponding to a second channel;
perform prediction decoding processing on the reconstructed value of the residual attribute transform coefficient based on a reconstructed value of a first attribute transform coefficient corresponding to a first channel, to obtain a reconstructed value of the second attribute transform coefficient, where the first channel and the second channel are different channels in a same color space; and
obtain an attribute transform coefficient of a to-be-decoded node based on the reconstructed value of the second attribute transform coefficient.

Optionally, the processor 710 is specifically configured to:

perform decoding processing on a second encoding result in the bitstream, to obtain the reconstructed value of the first attribute transform coefficient corresponding to a first channel; and
perform prediction decoding processing on the reconstructed value of the residual attribute transform coefficient based on the reconstructed value of the first attribute transform coefficient, to obtain the reconstructed value of the second attribute transform coefficient.

Optionally, the processor 710 is specifically configured to:

determine a prediction value of the second attribute transform coefficient based on the reconstructed value of the first attribute transform coefficient and a target parameter, where the target parameter is a correlation parameter between the first channel and the second channel; and
obtain the reconstructed value of the second attribute transform coefficient based on the prediction value of the second attribute transform coefficient and the reconstructed value of the residual attribute transform coefficient.

Optionally, the processor 710 is further configured to:
decode an encoding result of the target parameter in the bitstream, to obtain the target parameter.
Optionally, the transform tree structure includes multiple layers of nodes, and the target parameters corresponding to multiple nodes at a layer where the to-be-decoded node is located are the same.
Optionally, the processor 710 is further configured to:
determine a target parameter corresponding to the to-be-decoded node based on a reconstructed value of at least one target attribute transform coefficient, where the target attribute transform coefficient is a decoded attribute transform coefficient.
Optionally, the reconstructed value of the target attribute transform coefficient includes a reconstructed value of a third attribute transform coefficient corresponding to the first channel and a reconstructed value of a fourth attribute transform coefficient corresponding to the second channel; and

the target parameter corresponding to the to-be-decoded node is positively correlated with a first value, where the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or

the target parameter corresponding to the to-be-decoded node is negatively correlated with a second value, where the second value is a sum of first square values corresponding to all of the at least one target attribute transform coefficient, and the first square value is a square value of the reconstructed value of the third attribute transform coefficient corresponding to the target attribute transform coefficient.

Optionally, the at least one target attribute transform coefficient is any one of the following:

multiple decoded attribute transform coefficients at the layer where the to-be-decoded node is located; and attribute transform coefficients of multiple decoded nodes.

Optionally, the target parameter corresponding to the to-be-decoded node is a ratio of the first value to the second value.

Optionally, the reconstructed value of the target attribute transform coefficient includes the reconstructed value of the third attribute transform coefficient corresponding to the first channel and the reconstructed value of the fourth attribute transform coefficient corresponding to the second channel, and the target parameter is:

$$s^{L,k} = \frac{\sum_j AC_{rec,C1}^{L,j} \times AC_{rec,C2}^{L,j}}{\sum_j \left(AC_{rec,C1}^{L,j}\right)^2}$$

where L is a layer number of the layer where the to-be-decoded node is located, k represents that the to-be-decoded node is a k-th node at layer L, $s^{L,k}$ is the target parameter corresponding to the to-be-decoded node; $AC_{rec,C1}^{L,j}$ is a reconstructed value of the third attribute transform coefficient corresponding to a target attribute transform coefficient of a j-th node at layer L; $AC_{rec,C2}^{L,j}$ is a reconstructed value of the fourth attribute transform coefficient corresponding to the target attribute transform coefficient of the j-th node at layer L, and j is a positive integer greater than 0 and less than or equal to k.

Optionally, the first channel and the second channel are both chroma channels; or

the first channel is a chroma channel, and the second channel is a luma channel; or
the first channel is a luma channel, and the second channel is a chroma channel.

It can be understood that for the implementation processes of various implementations mentioned in this embodiment, reference may be made to the relevant descriptions of the point cloud encoding processing method or point cloud decoding processing method in the method embodiments, and the same or corresponding technical effects can be achieved. To avoid repetition, details are not described herein.

An embodiment of this application further provides a readable storage medium, where the readable storage medium stores a program or instructions, and when the program or instructions are executed by a processor, each process of the foregoing point cloud encoding processing method embodiment is implemented, or when the program or instructions are executed by a processor, each process of the foregoing point cloud decoding processing method embodiment is implemented, with the same technical effects achieved. To avoid repetition, details are not described herein.

The processor is the processor in the terminal described in the above embodiments. The readable storage medium includes a computer-readable storage medium, such as a computer read-only memory ROM, a random access memory RAM, a magnetic disk, or a compact disc. In some examples, the readable storage medium may be a non-transitory readable storage medium.

An embodiment of this application further provides a chip, where the chip including a processor and a communication interface, the communication interface is coupled to the processor, and the processor is configured to run a program or instructions to implement each process of the foregoing point cloud encoding processing method embodiment, or implement each process of the foregoing point cloud decoding processing method embodiment, with the same technical effects achieved. To avoid repetition, details are not described herein.

It should be understood that the chip mentioned in the embodiments of this application may include a system-level chip (also called a system-on-chip, a chip system, or a system-on-a-chip), or may include an independent display chip, and the like.

An embodiment of this application further provides a computer program/program product, where the computer program/program product is stored in a storage medium, and the computer program/program product is executed by at least one processor to implement each process of the foregoing point cloud encoding processing method or point cloud decoding processing method embodiment, with the same technical effects achieved. To avoid repetition, details are not described herein.

An embodiment of this application further provides a codec system including: an encoder device and a decoder device, where the encoder device may be configured to perform the steps of the foregoing point cloud encoding processing method, and the decoder device may be configured to perform the steps of the foregoing point cloud decoding processing method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Through the description of the foregoing implementations, those skilled in the art may clearly understand that the method in the foregoing embodiments may be implemented by a computer software product with a necessary general hardware platform. Certainly, the method in the foregoing embodiments may also be implemented by hardware. The computer software product is stored in a storage medium (such as a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A point cloud encoding processing method, comprising:

   performing, by an encoder, transform processing based on a transform tree structure corresponding to a to-be-encoded point cloud, to obtain attribute transform coefficients of a to-be-encoded node in the transform tree structure, wherein the attribute transform coefficients of the to-be-encoded node comprise a first attribute transform coefficient corresponding to a first channel and a second attribute transform coefficient corresponding to a second channel, and the first channel and the second channel are different channels in a same color space;
   performing, by the encoder, prediction encoding processing on the second attribute transform coefficient based on the first attribute transform coefficient, to obtain a residual attribute transform coefficient corresponding to the second attribute transform coefficient; and
   performing, by the encoder, encoding processing on the residual attribute transform coefficient, to obtain a first encoding result; wherein
   a bitstream of the to-be-encoded point cloud comprises the first encoding result.

2. The method according to claim 1, wherein the performing, by the encoder, prediction encoding processing on the second attribute transform coefficient based on the first attribute transform coefficient, to obtain a residual attribute transform coefficient corresponding to the second attribute transform coefficient comprises:

performing, by the encoder, encoding processing on the first attribute transform coefficient, to obtain a second encoding result;

performing, by the encoder, reconstruction processing on the first attribute transform coefficient based on the second encoding result, to obtain a reconstructed value of the first attribute transform coefficient; and

performing, by the encoder, prediction encoding processing on the second attribute transform coefficient based on the reconstructed value of the first attribute transform coefficient, to obtain the residual attribute transform coefficient corresponding to the second attribute transform coefficient.

3. The method according to claim 2, wherein the performing, by the encoder, prediction encoding processing on the second attribute transform coefficient based on the reconstructed value of the first attribute transform coefficient, to obtain the residual attribute transform coefficient corresponding to the second attribute transform coefficient comprises:

determining, by the encoder, a prediction value of the second attribute transform coefficient based on the reconstructed value of the first attribute transform coefficient and a target parameter, wherein the target parameter is a correlation parameter between the first channel and the second channel; and

obtaining, by the encoder, the residual attribute transform coefficient corresponding to the second attribute transform coefficient based on the prediction value of the second attribute transform coefficient and the second attribute transform coefficient.

4. The method according to claim 3, wherein the transform tree structure comprises multiple layers of nodes, and before the determining, by the encoder, a prediction value of the second attribute transform coefficient based on the reconstructed value of the first attribute transform coefficient and a target parameter, the method further comprises:

determining, by the encoder, the target parameter based on original attribute values of multiple nodes at a layer where the to-be-encoded node is located; wherein

the target parameters corresponding to the multiple nodes at the layer where the to-be-encoded node is located are the same.

5. The method according to claim 4, wherein the bitstream of the to-be-encoded point cloud further comprises an encoding result of the target parameter.

6. The method according to claim 3, wherein before the determining, by the encoder, a prediction value of the second attribute transform coefficient based on the reconstructed value of the first attribute transform coefficient and a target parameter, the method further comprises:

performing, by the encoder, reconstruction processing on at least one target attribute transform coefficient, to obtain a reconstructed value of the at least one target attribute transform coefficient, wherein the target attribute transform coefficient is an encoded attribute transform coefficient; and

determining, by the encoder, the target parameter corresponding to the to-be-encoded node based on the reconstructed value of the at least one target attribute transform coefficient.

7. The method according to claim 6, wherein the reconstructed value of the target attribute transform coefficient comprises a reconstructed value of a third attribute transform coefficient corresponding to the first channel and a reconstructed value of a fourth attribute transform coefficient corresponding to the second channel; and

the target parameter corresponding to the to-be-encoded node is positively correlated with a first value, wherein the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or

the target parameter corresponding to the to-be-encoded node is negatively correlated with a second value, wherein the second value is a sum of first square values corresponding to all of the at least one target attribute transform coefficient, and the first square value is a square value of the reconstructed value of the third attribute transform coefficient corresponding to the target attribute transform coefficient.

8. The method according to claim 6 or 7, wherein the at least one target attribute transform coefficient is any one of the following:

multiple encoded attribute transform coefficients at the layer where the to-be-encoded node is located; and attribute transform coefficients of multiple encoded nodes.

9. The method according to claim 7, wherein the target parameter corresponding to the to-be-encoded node is a ratio of the first value to the second value.

10. The method according to any one of claims 6 to 9, wherein the reconstructed value of the target attribute transform coefficient comprises the reconstructed value of the third attribute transform coefficient corresponding to the first channel and the reconstructed value of the fourth attribute transform coefficient corresponding to the second channel, and the target parameter is:

$$s^{L,k} = \frac{\sum_j AC_{rec,C1}^{L,j} \times AC_{rec,C2}^{L,j}}{\sum_j \left(AC_{rec,C1}^{L,j}\right)^2}$$

wherein L is a layer number of the layer where the to-be-encoded node is located, k represents that the to-be-encoded node is a k-th node at layer L, is the target parameter corresponding to the to-be-encoded node; is a reconstructed value of the third attribute transform coefficient corresponding to a target attribute transform coefficient of a j-th node at layer L; is a reconstructed value of the fourth attribute transform coefficient corresponding to the target attribute transform coefficient of the j-th node at layer L, and j is a positive integer greater than 0 and less than or equal to k.

11. The method according to any one of claims 1 to 10, wherein the first channel and the second channel are both chroma channels; or

the first channel is a chroma channel, and the second channel is a luma channel; or
the first channel is a luma channel, and the second channel is a chroma channel.

12. A point cloud decoding processing method, comprising:

performing, by a decoder, decoding processing on a first encoding result in a bitstream, to obtain a reconstructed value of a residual attribute transform coefficient, wherein the residual attribute transform coefficient is a residual attribute transform coefficient corresponding to a second attribute transform coefficient corresponding to a second channel;
performing, by the decoder, prediction decoding processing on the reconstructed value of the residual attribute transform coefficient based on a reconstructed value of a first attribute transform coefficient corresponding to a first channel, to obtain a reconstructed value of the second attribute transform coefficient, wherein the first channel and the second channel are different channels in a same color space; and
obtaining, by the decoder, an attribute transform coefficient of a to-be-decoded node based on the reconstructed value of the second attribute transform coefficient.

13. The method according to claim 12, wherein the performing, by the decoder, prediction decoding processing on the reconstructed value of the residual attribute transform coefficient based on a reconstructed value of a first attribute transform coefficient corresponding to a first channel, to obtain a reconstructed value of the second attribute transform coefficient comprises:

performing, by the decoder, decoding processing on a second encoding result in the bitstream, to obtain the reconstructed value of the first attribute transform coefficient corresponding to the first channel; and
performing, by the decoder, prediction decoding processing on the reconstructed value of the residual attribute transform coefficient based on the reconstructed value of the first attribute transform coefficient, to obtain the reconstructed value of the second attribute transform coefficient.

14. The method according to claim 13, wherein the performing, by the decoder, prediction decoding processing on the reconstructed value of the residual attribute transform coefficient based on the reconstructed value of the first attribute transform coefficient, to obtain the reconstructed value of the second attribute transform coefficient comprises:

determining, by the decoder, a prediction value of the second attribute transform coefficient based on the reconstructed value of the first attribute transform coefficient and a target parameter, wherein the target parameter is a correlation parameter between the first channel and the second channel; and

obtaining, by the decoder, the reconstructed value of the second attribute transform coefficient based on the prediction value of the second attribute transform coefficient and the reconstructed value of the residual attribute transform coefficient.

15. The method according to claim 14, wherein before the determining, by the decoder, a prediction value of the second attribute transform coefficient based on the reconstructed value of the first attribute transform coefficient and a target parameter, the method further comprises:

decoding, by the decoder, an encoding result of the target parameter in the bitstream, to obtain the target parameter.

16. The method according to claim 15, wherein the transform tree structure comprises multiple layers of nodes, and the target parameters corresponding to multiple nodes at a layer where the to-be-decoded node is located are the same.

17. The method according to claim 14, wherein before the determining, by the decoder, a prediction value of the second attribute transform coefficient based on the reconstructed value of the first attribute transform coefficient and a target parameter, the method further comprises:

determining, by the decoder, a target parameter corresponding to the to-be-decoded node based on a reconstructed value of at least one target attribute transform coefficient, wherein the target attribute transform coefficient is a decoded attribute transform coefficient.

18. The method according to claim 17, wherein the reconstructed value of the target attribute transform coefficient comprises a reconstructed value of a third attribute transform coefficient corresponding to the first channel and a reconstructed value of a fourth attribute transform coefficient corresponding to the second channel; and

the target parameter corresponding to the to-be-decoded node is positively correlated with a first value, wherein the first value is a sum of first products corresponding to all of the at least one target attribute transform coefficient, and the first product is a product of the reconstructed value of the third attribute transform coefficient corresponding to the target attribute transform coefficient and the reconstructed value of the fourth attribute transform coefficient corresponding to the target attribute transform coefficient; or

the target parameter corresponding to the to-be-decoded node is negatively correlated with a second value, wherein the second value is a sum of first square values corresponding to all of the at least one target attribute transform coefficient, and the first square value is a square value of the reconstructed value of the third attribute transform coefficient corresponding to the target attribute transform coefficient.

19. The method according to claim 17 or 18, wherein the at least one target attribute transform coefficient is any one of the following:

multiple decoded attribute transform coefficients at the layer where the to-be-decoded node is located; and
attribute transform coefficients of multiple decoded nodes.

20. The method according to claim 18, wherein the target parameter corresponding to the to-be-decoded node is a ratio of the first value to the second value.

21. The method according to any one of claims 17 to 20, wherein the reconstructed value of the target attribute transform coefficient comprises the reconstructed value of the third attribute transform coefficient corresponding to the first channel and the reconstructed value of the fourth attribute transform coefficient corresponding to the second channel, and the target parameter is:

$$s^{L,k} = \frac{\sum_j AC_{rec,C1}^{L,j} \times AC_{rec,C2}^{L,j}}{\sum_j \left(AC_{rec,C1}^{L,j}\right)^2}$$

wherein L is a layer number of the layer where the to-be-decoded node is located, k represents that the to-be-decoded node is a k-th node at layer L, is the target parameter corresponding to the to-be-decoded node; is a reconstructed value of the third attribute transform coefficient corresponding to a target attribute transform coefficient of a j-th node at layer L; is a reconstructed value of the fourth attribute transform coefficient corresponding to the target attribute transform coefficient of the j-th node at layer L, and j is a positive integer greater than 0 and less than or equal to k.

**22.** The method according to any one of claims 12 to 21, wherein the first channel and the second channel are both chroma channels; or

the first channel is a chroma channel, and the second channel is a luma channel; or
the first channel is a luma channel, and the second channel is a chroma channel.

**23.** A point cloud encoding processing apparatus, comprising:

a transform module configured to perform transform processing based on a transform tree structure corresponding to a to-be-encoded point cloud, to obtain attribute transform coefficients of a to-be-encoded node in the transform tree structure, wherein the attribute transform coefficients of the to-be-encoded node comprise a first attribute transform coefficient corresponding to a first channel and a second attribute transform coefficient corresponding to a second channel, and the first channel and the second channel are different channels in a same color space;
a first encoding module configured to perform prediction encoding processing on the second attribute transform coefficient based on the first attribute transform coefficient, to obtain a residual attribute transform coefficient corresponding to the second attribute transform coefficient; and
a second encoding module configured to perform encoding processing on the residual attribute transform coefficient, to obtain a first encoding result; wherein
a bitstream of the to-be-encoded point cloud comprises the first encoding result.

**24.** A point cloud decoding processing apparatus, comprising:

a first decoding module configured to perform decoding processing on a first encoding result in a bitstream, to obtain a reconstructed value of a residual attribute transform coefficient, wherein the residual attribute transform coefficient is a residual attribute transform coefficient corresponding to a second attribute transform coefficient corresponding to a second channel;
a second decoding module configured to perform prediction decoding processing on the reconstructed value of the residual attribute transform coefficient based on a reconstructed value of a first attribute transform coefficient corresponding to a first channel, to obtain a reconstructed value of the second attribute transform coefficient, wherein the first channel and the second channel are different channels in a same color space; and
an obtaining module configured to obtain an attribute transform coefficient of a to-be-decoded node based on the reconstructed value of the second attribute transform coefficient.

**25.** An electronic device, comprising a processor, a memory, and a program or instructions stored on the memory and capable of running on the processor, wherein the program or instructions, when executed by the processor, implement the steps of the point cloud encoding processing method according to any one of claims 1 to 11; or the program or instructions, when executed by the processor, implement the steps of the point cloud decoding processing method according to any one of claims 12 to 22.

**26.** A chip, wherein the chip comprises a processor and a communication interface, the communication interface is coupled to the processor, and the processor is configured to run a program or instructions to implement the steps of the point cloud encoding processing method according to any one of claims 1 to 11, or implement the steps of the point cloud decoding processing method according to any one of claims 12 to 22.

**27.** A readable storage medium, wherein the readable storage medium stores a program or instructions, the program or instructions, when executed by a processor, implement the steps of the point cloud encoding processing method according to any one of claims 1 to 11, or the program or instructions, when executed by a processor, implement the steps of the point cloud decoding processing method according to any one of claims 12 to 22.

FIG. 1

Geometry coordinate information                    Attribute information

```
                    ┌──────────────────┐          ┌──────────────────┐
                    │ Coordinate       │          │ Color transform  │
                    │ transform        │          │                  │
                    └──────────────────┘          └──────────────────┘
                            │                              │
                    ┌──────────────────┐          ┌──────────────────┐
                    │ Voxelization     │  ───────▶│ Attribute        │
                    │                  │  ───────▶│ recoloring       │
                    └──────────────────┘          └──────────────────┘
```

| Octree-based geometry encoding | | Geomet -ry reconstr -uction | Prediction encoding/ Prediction transform encoding | Transform encoding |

| Prediction tree-based geometry encoding | | | Quantization | |

| Entropy coding | | | Entropy coding |

Geometry bitstream                             Attribute bitstream

FIG. 2a

Geometry coordinate
information

Attribute information

Coordinate transform

Color transform

Voxelization

Attribute recoloring

Octree-based
geometry
encoding

Prediction tree–
based geometry
encoding

Region
adaptive
hierarchical
transform

Prediction
transform encoding

Triangular
geometry
encoding

Geomet-
ry
reconst-
ruction

Lifting transform
encoding

Quantization

Entropy coding

Entropy coding

Geometry bitstream

Attribute bitstream

FIG. 2b

Geometry bitstream | Attribute bitstream

Entropy decoding

Entropy decoding

Octree-based geometry decoding | Prediction tree–based geometry decoding

De-quantization

Geometry reconstruction

Prediction decoding/ Prediction transform decoding | Transform decoding

Coordinate inverse transform

Color inverse transform

Geometry coordinate information

Attribute information

FIG. 3a

Geometry bitstream

Attribute bitstream

```
┌─────────────────────────┐                    ┌─────────────────────────┐
│    Entropy decoding     │                    │    Entropy decoding     │
└─────────────────────────┘                    └─────────────────────────┘
```

```
┌──────────┐  ┌──────────────┐                 ┌─────────────────────────┐
│Octree-based│ │Prediction tree–│               │    De-quantization      │
│ geometry │  │based geometry  │               └─────────────────────────┘
│ decoding │  │  decoding    │
└──────────┘  └──────────────┘
```

```
      ┌──────────┐
      │Triangular │
      │ geometry  │
      │ decoding  │
      └──────────┘
```

|  | Region adaptive hierarchical coding | Prediction transform encoding |
|  |  | Lifting transform encoding |

Geometry reconstruction

```
┌─────────────────────────┐                    ┌─────────────────────────┐
│Coordinate inverse transform│                 │  Color inverse transform │
└─────────────────────────┘                    └─────────────────────────┘
```

Geometry coordinate information

Attribute information

FIG. 3b

FIG. 3c

Start

An encoder performs transform processing based on a transform tree structure corresponding to a to-be-encoded point cloud, to obtain attribute transform coefficients of a to-be-encoded node in the transform tree structure — 11

The encoder performs prediction encoding on a second attribute transform coefficient based on the first attribute transform coefficient to obtain a residual attribute transform coefficient corresponding to the second attribute transformation coefficient — 12

The encoder performs encoding processing on the residual attribute transform coefficient, to obtain a first encoding result — 13

End

FIG. 4

```
                          ┌─────────────┐
                          │    Start     │
                          └─────────────┘
                                 │
                                 ▼
┌──────────────────────────────────────────────────────────────┐
│  A decoder performs decoding processing on a first encoding    │      21
│  result in a bitstream, to obtain a reconstructed value of a   │
│  residual attribute transform coefficient                      │
└──────────────────────────────────────────────────────────────┘
                                 │
                                 ▼
┌──────────────────────────────────────────────────────────────┐
│  The decoder performs prediction decoding processing on the    │      22
│  reconstructed value of the residual attribute transform       │
│  coefficient based on a reconstructed value of a first         │
│  attribute transform coefficient corresponding to a first      │
│  channel, to obtain a reconstructed value of a second          │
│  attribute transform coefficient                               │
└──────────────────────────────────────────────────────────────┘
                                 │
                                 ▼
┌──────────────────────────────────────────────────────────────┐
│  The decoder obtains an attribute transform coefficient of a   │      23
│  to-be-decoded node based on the reconstructed value of the    │
│  second attribute transform coefficient                        │
└──────────────────────────────────────────────────────────────┘
                                 │
                                 ▼
                          ┌─────────────┐
                          │     End      │
                          └─────────────┘
```

FIG. 5

| Lossless geometry (C1_ai) | Lossy attribute (Lossless geometry, Lossy attributes[all intra]) Point cloud attribute quality distortion evaluation parameter (End-to-End BD-AttrRate) [%] | | | |
|---|---|---|---|---|
| | Luma (luma) | Chroma (Chroma) Cb | Chroma (Chroma) Cr | Reflectance (Reflectance) |
| Solid average (Solid average) | -1.4% | -1.3% | -3.6% | |
| Dense average (Dense average) | -0.9% | -0.9% | -8.8% | |
| Sparse average (Sparse average) | -0.9% | -1.0% | -4.8% | |
| Scant average (Scant average) | -0.8% | -0.8% | -8.3% | |
| Am-fused average (Am-fused average) | -0.7% | -0.9% | -3.6% | 0.0% |
| Am-frame average (Am-frame average) | | | | |
| Am-frame non-spinning average (Am-frame non-spinning average) | | | | |
| Overall average (Overall average) | -0.9% | -1.0% | -6.5% | 0.0% |
| Avg. Enc Time (Avg .Enc Time) [%] | 101% | | | |
| Avg. Dec Time (Avg .Dec Time) [%] | 102% | | | |

FIG. 6

| Lossy geometry (C2_ai) | Lossy attribute (Lossless geometry, Lossy attributes[all intra]) | | | | | |
| | Point cloud attribute quality distortion evaluation parameter (End-to-End BD-AttrRate) [%] | | | | Point cloud geometry quality evaluation parameter (Geom.BD-TotGeomRate) [%] | |
| | Luma (luma) | Chroma (Chroma) Cb | Chroma (Chroma) Cr | Reflectance (Reflectance) | D1 | D2 |
| Solid average (Solid average) | -1.5% | -1.5% | -4.8% | | 0.0% | 0.0% |
| Dense average (Dense average) | -0.9% | -1.0% | -8.2% | | 0.0% | 0.0% |
| Sparse average (Sparse average) | -1.0% | -1.1% | -5.6% | | 0.0% | 0.0% |
| Scant average (Scant average) | -0.9% | -1.0% | -8.9% | | 0.0% | 0.0% |
| Am-fused average (Am-fused average) | -0.7% | -0.9% | -1.1% | 0.0% | 0.0% | 0.0% |
| Am-frame average (Am-frame average) | | | | | | |
| Am-frame non-spinning average (Am-frame non-spinning average) | | | | | | |
| Overall average (Overall average) | -1.0% | -1.1% | -6.9% | 0.0% | 0.0% | 0.0% |
| Avg. Enc Time (Avg .Enc Time) [%] | 100% | | | | | |
| Avg. Dec Time (Avg .Dec Time) [%] | 102% | | | | | |

FIG. 7

400

Point cloud encoding
processing apparatus

Transform module — 401

First encoding module — 402

Second encoding module — 403

FIG. 8

500

Point cloud decoding
processing apparatus

First decoding module — 501

Second decoding module — 502

Obtaining module — 503

FIG. 9

600

Electronic device

601 — Processor ⟺ Memory — 602

FIG. 10

700

Radio frequency unit — 701

Network module — 702

Memory — 709
- Application program
- Operating system

710

Interface unit — 708

Audio output unit — 703

User input unit — 707
- Touch panel — 7071
- Other input devices — 7072

Processor

Input unit — 704
- Graphics processing unit — 7041
- Microphone — 7042

Display unit — 706
- Display panel — 7061

Sensor — 705

FIG. 11

## INTERNATIONAL SEARCH REPORT

| International application No. |
|---|
| **PCT/CN2024/120907** |

**A.     CLASSIFICATION OF SUBJECT MATTER**

H04N19/597(2014.01)i;  H04N19/186(2014.01)i

According to International Patent Classification (IPC) or to both national classification and IPC

**B.     FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE, CNKI: 点云, 编码, 解码, 压缩, 处理, 分层, 变换, 树, 第一, 第二, 分量间, 跨分量, 跨属性, 属性间, 预测, point cloud, picture, encode, decode, compression, process, hierarchical, transform, tree, first, second, inter, cross, component, attribute, predict, RAHT

**C.     DOCUMENTS CONSIDERED TO BE RELEVANT**

| Category* | Citation of document, with indication, where appropriate, of the relevant passages | Relevant to claim No. |
|---|---|---|
| X | CN 114365502 A (TENCENT AMERICA LLC) 15 April 2022 (2022-04-15) description, paragraphs 20-118, and figures 1-6 | 12-16, 22, 24-27 |
| Y | CN 114365502 A (TENCENT AMERICA LLC) 15 April 2022 (2022-04-15) ditto | 1-3, 11, 23 |
| Y | US 2017347100 A1 (MICROSOFT TECHNOLOGY LICENSING LLC) 30 November 2017 (2017-11-30) description, paragraphs 45-68, and figures 1-25 | 1-3, 11, 23 |
| X | CN 117083858 A (QUALCOMM INC.) 17 November 2023 (2023-11-17) description, paragraphs 22-258, and figures 1-10 | 12-16, 22, 24-27 |
| Y | CN 117083858 A (QUALCOMM INC.) 17 November 2023 (2023-11-17) ditto | 1-3, 11, 23 |
| X | US 2022050816 A1 (TENCENT AMERICA LLC) 17 February 2022 (2022-02-17) description, paragraphs 22-97, and figures 1-6 | 12-16, 22, 24-27 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 December 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/120907** |

### C.    DOCUMENTS CONSIDERED TO BE RELEVANT

| Category* | Citation of document, with indication, where appropriate, of the relevant passages | Relevant to claim No. |
| --- | --- | --- |
| Y | US 2022050816 A1 (TENCENT AMERICA LLC) 17 February 2022 (2022-02-17)<br>ditto | 1-3, 11, 23 |
| A | US 2020302651 A1 (BLACKBERRY LIMITED; 2236008 ONTARIO INC.) 24 September 2020 (2020-09-24)<br>entire document | 1-27 |

Form PCT/ISA/210 (second sheet) (July 2022)

**INTERNATIONAL SEARCH REPORT**
Information on patent family members

| International application No. |
| --- |
| **PCT/CN2024/120907** |

| Patent document cited in search report | | | Publication date (day/month/year) | Patent family member(s) | | | Publication date (day/month/year) |
| --- | --- | --- | --- | --- | --- | --- | --- |
| CN | 114365502 | A | 15 April 2022 | AU | 2021257959 | A1 | 03 March 2022 |
| | | | | US | 2022051447 | A1 | 17 February 2022 |
| | | | | US | 11816868 | B2 | 14 November 2023 |
| | | | | US | 2024013445 | A1 | 11 January 2024 |
| | | | | CA | 3137654 | A1 | 14 February 2022 |
| | | | | WO | 2022035505 | A1 | 17 February 2022 |
| | | | | JP | 2022547759 | A | 16 November 2022 |
| | | | | JP | 7276974 | B2 | 18 May 2023 |
| | | | | EP | 3984230 | A1 | 20 April 2022 |
| | | | | EP | 3984230 | A4 | 11 January 2023 |
| | | | | KR | 20220021919 | A | 22 February 2022 |
| | | | | KR | 102589714 | B1 | 13 October 2023 |
| US | 2017347100 | A1 | 30 November 2017 | US | 10223810 | B2 | 05 March 2019 |
| CN | 117083858 | A | 17 November 2023 | BR | 112023019729 | A2 | 31 October 2023 |
| | | | | WO | 2022217215 | A1 | 13 October 2022 |
| | | | | JP | 2024512995 | A | 21 March 2024 |
| | | | | TW | 202245476 | A | 16 November 2022 |
| | | | | KR | 20230167031 | A | 07 December 2023 |
| | | | | US | 2024314358 | A1 | 19 September 2024 |
| | | | | EP | 4320865 | A1 | 14 February 2024 |
| US | 2022050816 | A1 | 17 February 2022 | JP | 2023503458 | A | 30 January 2023 |
| | | | | JP | 7395740 | B2 | 11 December 2023 |
| | | | | EP | 4031907 | A1 | 27 July 2022 |
| | | | | EP | 4031907 | A4 | 07 December 2022 |
| | | | | WO | 2022039815 | A1 | 24 February 2022 |
| | | | | US | 11580671 | B2 | 14 February 2023 |
| | | | | KR | 20220051209 | A | 26 April 2022 |
| | | | | KR | 102625790 | B1 | 15 January 2024 |
| US | 2020302651 | A1 | 24 September 2020 | US | 10964068 | B2 | 30 March 2021 |
| | | | | WO | 2020187710 | A1 | 24 September 2020 |
| | | | | EP | 3942830 | A1 | 26 January 2022 |
| | | | | EP | 3942830 | B1 | 04 September 2024 |

Form PCT/ISA/210 (patent family annex) (July 2022)

**EP 4 787 859 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311273886